(19) **Europäisches Patentamt / European Patent Office / Office européen des brevets**

(11) **EP 4 757 362 A1**

(12) **EUROPEAN PATENT APPLICATION**
published in accordance with Art. 153(4) EPC

(43) Date of publication:
10.06.2026 Bulletin 2026/24

(21) Application number: 24860313.6

(22) Date of filing: 22.08.2024

(51) International Patent Classification (IPC):
*H04W 4/80* (2018.01)     *H04W 4/06* (2009.01)
*H04W 4/02* (2018.01)     *H04M 1/72412* (2021.01)
*H04M 1/60* (2006.01)     *G01S 13/02* (2006.01)
*G01S 19/14* (2010.01)     *G06F 3/16* (2006.01)
*H04R 3/12* (2006.01)

(52) Cooperative Patent Classification (CPC):
G01S 13/02; G01S 19/14; G06F 3/16; H04M 1/60;
H04M 1/72412; H04R 3/12; H04W 4/02;
H04W 4/06; H04W 4/80

(86) International application number:
PCT/KR2024/012507

(87) International publication number:
WO 2025/048393 (06.03.2025 Gazette 2025/10)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 28.08.2023  KR 20230112703
24.11.2023  KR 20230165816

(71) Applicant: **Samsung Electronics Co., Ltd.**
**Suwon-si, Gyeonggi-do 16677 (KR)**

(72) Inventor: **RYU, Kyusang**
**Suwon-si Gyeonggi-do 16677 (KR)**

(74) Representative: **Appleyard Lees IP LLP**
**G Mill**
**Dean Clough Industrial Park**
**Halifax HX3 5AH (GB)**

(54) **ELECTRONIC DEVICE FOR PROVIDING AUDIO SERVICE, AND OPERATING METHOD THEREOF**

(57)     According to one embodiment, an electronic device (101) comprises: a communication circuit (190); one or more processors (120) including processing circuitry; and a memory (130) including instructions, wherein, when individually or collectively executed by the one or more processors, the instructions cause the electronic device to establish, through the communication circuit, a connection with one or more external electronic devices (102, 104, 211, 212, 213, 214, 215, 216), determine, from among the one or more BISs included in a broadcast isochronous group (BIG), a broadcast isochronous stream (BIS) to be received by the one or more external electronic devices, and transmit, through the communication circuit, control information including an index of the one or more external electronic devices and an index of the determined BIS. Other embodiments are possible.

FIG. 6

**Description**

**[Technical Field]**

The disclosure relates to an electronic device providing an audio service and an operating method thereof.

**[Background Art]**

Recently, with the development of an information communication technology, various wireless communication technologies and various services have been developed. In particular, a Bluetooth scheme which is one of short-range communication schemes has been actively used, and electronic devices using the Bluetooth scheme have been also widely used.

The Bluetooth scheme may include a Bluetooth legacy (or Bluetooth classic) scheme and/or a Bluetooth low energy (BLE) scheme. An electronic device (e.g., a smart phone) that provides an audio service based on the BLE scheme may independently establish a communication link (e.g., a connected isochronous stream (CIS)) with each of external electronic devices, and transmit and receive data to and from the external electronic devices via the established communication link (e.g., a connection-based communication). The electronic device may establish a communication link (e.g., a broadcast isochronous stream (BIS)) and transmit and receive data to and from the external electronic devices via the established communication link (e.g., a broadcast-based communication).

Like this, the audio service based on the BLE scheme may be provided via a connection-based CIS or a non-connection-based BIS. If a multi-party audio service is provided via the CIS, all electronic devices participating in the multi-party audio service establish BLE links to each other, and establish CISs based on the established BLE links. If the number of electronic devices participating in a CIS-based multi-party audio service increases, the number of links which need to be established between the electronic devices participating in the CIS-based multi-party audio service may increase exponentially, and this exponential increase in the number of links may make it difficult to provide the CIS-based multi-party audio service and may also make it impossible for the CIS-based multi-party audio service to be provided.

Alternatively, if the multi-party audio service is provided via a BIS connection, there is no limitation on the number of electronic devices participating in the multi-party audio service, so the audio service may be provided normally even if the number of electronic devices participating in the multi-party audio service increases exponentially. However, a current Bluetooth scheme does not specifically define a scheme of receiving audio data via the BIS connection if a multi-party audio service is provided via the BIS connection, and thus, may not define how electronic devices participating in the multi-party audio service may receive the audio data, and thus, it may be difficult to efficiently provide the multi-party audio service.

**[Detailed Description of the Invention]**

**[Technical Solution]**

An embodiment of the disclosure may provide an electronic device for providing an audio service and an operating method thereof.

An embodiment of the disclosure may provide an electronic device for providing a multi-party audio service and an operating method thereof.

According to an embodiment of the disclosure, an electronic device (101) comprises communication circuitry (190), at least one processor (120) including processing circuitry, and memory (130) storing instructions.

According to an embodiment of the disclosure, the instructions that, when executed by the at least one processor individually or collectively, cause the electronic device to establish, via the at least one communication circuit, a connection with at least one external electronic device (102; 104; 211; 212; 213; 214; 215; 216).

According to an embodiment of the disclosure, the instructions that, when executed by the at least one processor individually or collectively, cause the electronic device to determine a broadcast isochronous stream (BIS) to be received by the at least one external electronic device among at least one BIS included in a broadcast isochronous group (BIG).

According to an embodiment of the disclosure, the instructions that, when executed by the at least one processor individually or collectively, cause the electronic device to transmit, via the at least one communication circuit, control information including an index of the least one external electronic device and an index of the determined BIS.

According to an embodiment of the disclosure, an electronic device (102; 104; 211; 212; 213; 214; 215; 216) comprises communication circuitry (402), at least one processor (404) including processing circuitry, and memory (406) storing instructions.

According to an embodiment of the disclosure, the instructions that, when executed by the at least one processor individually or collectively, cause the electronic device to establish, via the at least one communication circuit, a connection with an external electronic device (101).

According to an embodiment of the disclosure, the instructions that, when executed by the at least one processor individually or collectively, cause the electronic device to receive, via the communication circuitry, control information including an index of the electronic device and a BIS index, from the external electronic device.

According to an embodiment of the disclosure, the instructions that, when executed by the at least one processor individually or collectively, cause the electronic device to, based on the control information, receive a BIS corresponding to the BIS index among at least one BIS included in a BIG.

According to an embodiment, a storage medium storing at least one computer-readable instruction may be provided.

According to an embodiment, the at least one instruction, when executed by at least one processor (120) including processing circuitry of an electronic device (101) individually or collectively, may cause the electronic device (101) to perform at least one operation.

According to an embodiment, the at least one operation may comprise establishing a connection with at least one external electronic device (102; 104; 211; 212; 213; 214; 215; 216).

According to an embodiment, the at least one operation may comprise determining a broadcast isochronous stream (BIS) to be received by the at least one external electronic device among at least one BIS included in a broadcast isochronous group (BIG).

According to an embodiment, the at least one operation may comprise transmitting control information including an index of the least one external electronic device and an index of the determined BIS.

**[Description of the Drawings]**

FIG. 1 is a block diagram schematically illustrating an electronic device within a network environment according to an embodiment.

FIG. 2 is a diagram schematically illustrating connections between electronic devices which are based on a Bluetooth scheme in a wireless communication network according to an embodiment.

FIG. 3 is a diagram schematically illustrating connections between electronic devices which are based on a Bluetooth scheme in a wireless communication network according to an embodiment.

FIG. 4 is a block diagram schematically illustrating an external electronic device in a wireless communication network according to an embodiment.

FIG. 5 is a diagram schematically illustrating configuration of BIG events and BIS events in a wireless communication network according to an embodiment.

FIG. 6 is a flowchart schematically illustrating an operating method of an electronic device according to an embodiment.

FIG. 7 is a flowchart schematically illustrating an operating method of an electronic device according to an embodiment.

FIG. 8 is a flowchart schematically illustrating a UI for selecting an audio channel outputted by an external electronic device according to an embodiment.

FIG. 9 is a diagram for describing audio channels outputted by a plurality of external electronic devices according to an embodiment.

FIG. 10 is a flowchart schematically illustrating an operating method of an electronic device according to an embodiment.

FIG. 11 is a flowchart schematically illustrating an operating method of an electronic device according to an embodiment.

FIG. 12 is a flowchart schematically illustrating an operating method of an electronic device according to an embodiment.

FIG. 13 is a flowchart schematically illustrating an operating method of an electronic device according to an embodiment.

FIG. 14 is a diagram for describing an operation of outputting audio channels in an external electronic device according to an embodiment.

FIG. 15 is a diagram for describing an operation of outputting audio channels in an external electronic device according to an embodiment.

FIG. 16 is a flowchart schematically illustrating an operating method of an electronic device according to an embodiment.

FIG. 17 is a diagram for describing an operation of outputting audio channels in an external electronic device according to an embodiment.

FIG. 18 is a diagram for describing an operation of outputting audio channels in an external electronic device according to an embodiment.

**[Mode for Invention]**

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe specific embodiments, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an embodiment of the disclosure will describe an electronic device, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the electronic device may be a device having a communication function such as, for example, a mobile phone, a personal digital assistant (PDA), a smart phone, a wireless MODEM, and a notebook.

In a detailed description of an embodiment of the disclosure, a standard specified by Bluetooth special interest group (SIG) is referred to, but the main subject of the disclosure can be somewhat modified and applied to other communication systems having a similar technical background without departing from the scope of the disclosure, and the modifications can be made on the basis of determination of those skilled in the art.

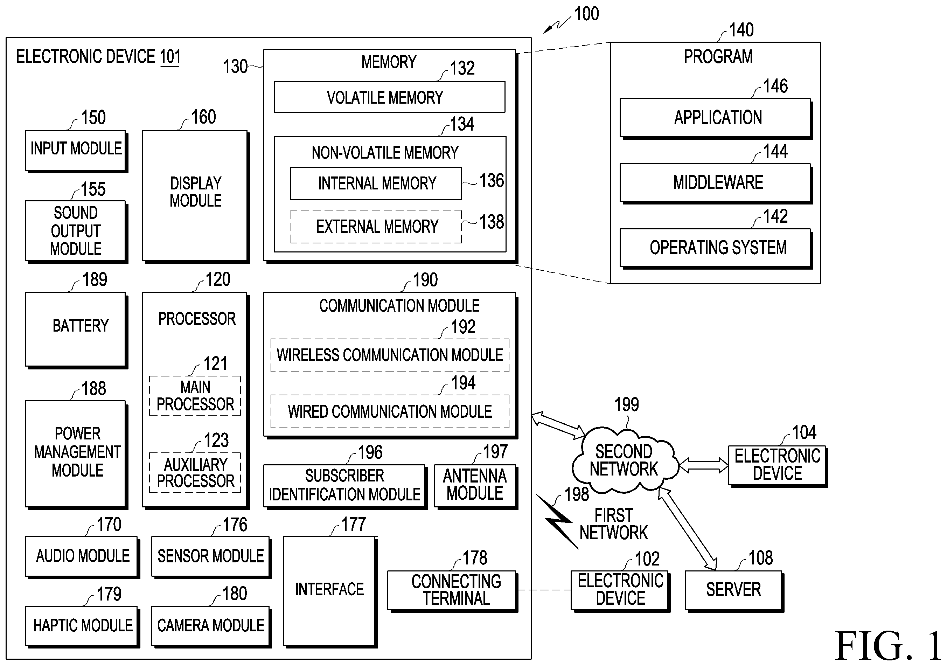

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mm Wave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

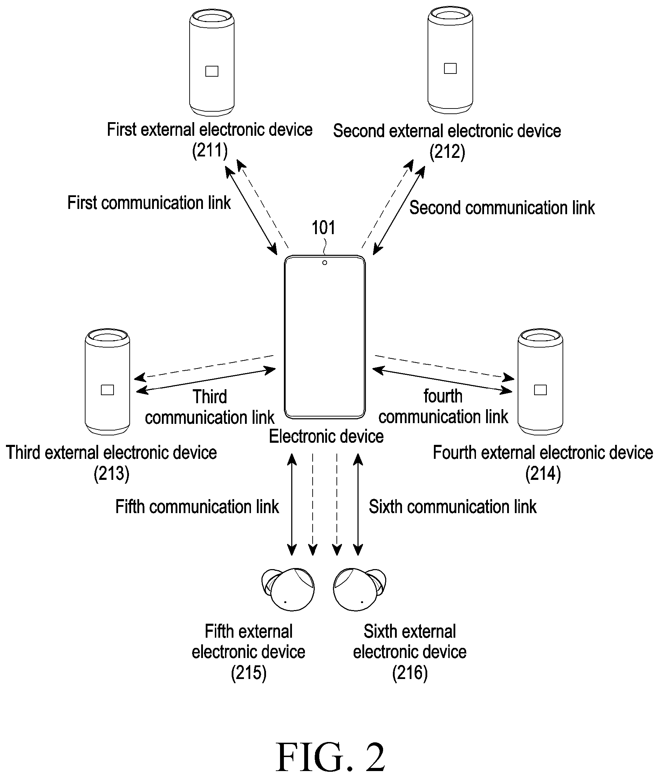

FIG. 2 is a diagram schematically illustrating connections between electronic devices which are based on a Bluetooth scheme in a wireless communication network according to an embodiment.

Referring to FIG. 2, an electronic device 101 (e.g., an electronic device 101 in FIG. 1) may be wirelessly and/or wiredly connected to a plurality of external electronic devices. The electronic device 101 may be wirelessly connected to the plurality of external electronic devices based on a Bluetooth scheme. The electronic device 101 may be wiredly connected to the plurality of external electronic devices based on a separate protocol. The plurality of external electronic devices (e.g., an electronic device 102 in FIG. 1) may include a first external electronic device 211, a second external electronic device 212, a third external electronic device 213, a fourth external electronic device 214, a fifth external electronic device 215, and/or a sixth external electronic device 216.

For example, the electronic device 101 may be a smartphone. Each of the first external electronic device 211, the second external electronic device 212, the third external electronic device 213, and the fourth external electronic device 214 may be a Bluetooth speaker. The fifth external electronic device 215 may be a first ear bud (e.g., a left ear bud) included in an ear-wearable device, and the sixth external electronic device 216 may be a second ear bud (e.g., a right ear bud) included in the ear-wearable device.

In an embodiment, the electronic device 101, the first external electronic device 211, the second external electronic device 212, the third external electronic device 213, the fourth external electronic device 214, the fifth external electronic device 215, and/or the sixth external electronic device 216 may provide an audio service based on a Bluetooth scheme. In an embodiment, the Bluetooth scheme may include a Bluetooth legacy (or Bluetooth classic) scheme, and/or a Bluetooth low energy (BLE) scheme.

According to an embodiment, the electronic device 101, the first external electronic device 211, the second external electronic device 212, the third external electronic device 213, the fourth external electronic device 214, the fifth external electronic device 215, and/or the sixth external electronic device 216 may establish a connection (e.g., a communication link) with each other, and may transmit and/or receive data (e.g., audio data) with each other via the established connection. For example, each of the electronic device 101, the first external electronic device 211, the second external electronic device 212, the third external electronic device 213, the fourth external electronic device 214, the fifth external electronic device 215, and/or the sixth external electronic device 216 may establish a communication link based on at least one of a Wi-Fi scheme and/or the Bluetooth scheme, but a scheme by which each of the electronic device 101, the first external electronic device 211, the second external electronic device 212, the third external electronic device 213, the fourth external electronic device 214, the fifth external electronic device 215, and/or the sixth external electronic device 216 establish the communication link is not limited to only at least one of the Wi-Fi scheme and/or the Bluetooth scheme. In an embodiment, the electronic device 101, the first external electronic device 211, the second external electronic device 212, the third external electronic device 213, the fourth external electronic device 214, the fifth external electronic device 215, and/or the sixth external electronic device 216 may be synchronized to a broadcast isochronous group (BIG).

In an embodiment, the electronic device 101 may operate as a source device. In an embodiment, the source device may be a device which transmits (for example, broadcasts) a broadcast isochronous stream (BIS). In an embodiment, the source device may generate a BIG including a plurality of (e.g., N) BISes. The source device may transmit a plurality of audio channel signals via the plurality of BISes. A BIS index may be allocated to each BIS, and the plurality of audio channels may include a front left channel, a front right channel, a front center channel, a back left channel, and/or a back right channel. For example, it will be assumed that an index of a BIS corresponding to the front left channel is "1", an index of a BIS corresponding to the front right channel is "2", an index of a BIS corresponding to the front center channel is "3", an index of a BIS corresponding to the back left channel is "4", and an index of a BIS corresponding to the back right channel is "5". The source device may advertise information related to the BISes included in the BIG. In an embodiment, the source device may advertise the information related to the BISes via periodic advertising. The source device may also be referred to as a "BIS source device". It should be noted that in the detailed description below, the terms a "BIS index" and an "index of a BIS" may be used interchangeably.

The electronic device 101 may operate as the source device and also as an assistant device. In an embodiment, the assistant device may monitor information related to BISes transmitted from the source device. In an embodiment, the assistant device may determine, based on the monitored information, a BIS which at least one of a plurality of sink devices connected to the assistant device will receive. The assistant device may transmit a determined BIS index to a sink device so that the sink device receives the BIS determined in the assistant device and outputs audio data of an audio channel corresponding to the received BIS. In an embodiment, the electronic device 101 may transmit control information including an index of the sink device and a BIS index determined for the sink device, and the sink device may receive a BIS corresponding to the BIS index determined by the electronic device 101 by receiving the control information transmitted by the electronic device 101. It should be noted that in the detailed description below, the terms an "index of a sink device" and a "sink device index" may be used interchangeably. In an embodiment, the assistant device may transmit the determined BIS index to the sink device via a connection (e.g., a communication link) established between the assistant device and the sink device. In an embodiment, the assistant device may also change a BIS determined for at least one of a plurality of sink devices. The assistant device may transmit a changed BIS index to the sink device so that the sink device may receive a BIS changed by the assistant device and output audio data of an audio channel corresponding to the received BIS. The assistant device may also be referred to as a "BIS assistant device."

Each of the first external electronic device 211, the second external electronic device 212, the third external electronic device 213, the fourth external electronic device 214, the fifth external electronic device 215, and/or the sixth external electronic device 216 may operate as the sink device. In an embodiment, the sink device may receive BISes transmitted by the source device. According to an embodiment, the sink device may receive a BIS determined by the assistant device among the BISes transmitted by the source device, regardless of location information of the sink device itself, and output audio data of an audio channel corresponding to the received BIS. The sink device may receive a BIS index corresponding to a BIS, which the sink device will receive, from the assistant device via a connection (e.g., a communication link) established between the sink device and the assistant device. The sink device may receive the BIS corresponding to the BIS index received from the assistant device, and may identify that a BIS which the sink device needs to receive from the assistant device is changed while outputting audio data of an audio channel corresponding to the received BIS. The sink device may receive a changed BIS index which the sink device needs to receive from the assistant device while outputting the audio data, and may receive a BIS corresponding to the changed BIS index. The sink device may also be referred to as a "BIS sink device." The first external electronic device 211 may be a first sink device, the second external electronic device 212 may be a second sink device, the third external electronic device 213 may be a third sink device, the fourth external electronic device 214 may be a fourth sink device, the fifth external electronic device 215 may be a fifth sink device, and/or the sixth external electronic device 216 may be a sixth sink device.

A communication link established between the electronic device 101 and the first external electronic device 211 will be referred to as a "first communication link", a communication link established between the electronic device 101 and the second external electronic device 212 will be referred to as a "second communication link", a communication link established between the electronic device 101 and the third external electronic device 213 will be referred to as a "third communication link", a communication link established between the electronic device 101 and the fourth external electronic device 214 will be referred to as a "fourth communication link", a communication link established between the electronic device 101 and the fifth external electronic device 215 will be referred to as a "fifth communication link", and a communication link established between the electronic device 101 and the sixth external electronic device 216 will be referred to as a "sixth communication link."

In FIG. 2, it will be assumed that the electronic device 101 operates as the source device and also operates as the assistant device. Since the electronic device 101 operates as the source device and also operates as the assistant device in FIG. 2, the electronic device 101 may determine a BIS which each of the first external electronic device 211, the second external electronic device 212, the third external electronic device 213, the fourth external electronic device 214, the fifth external electronic device 215, and/or the sixth external electronic device 216 will receive. In FIG. 2, it will be assumed that the electronic device 101 operating as the assistant device determines that each of the first external electronic device 211 and the fifth external electronic device 215 receives a BIS corresponding to the front left channel, determines that each of the second external electronic device 212 and the sixth external electronic device 216 receives a BIS corresponding to the front right channel, determines that the third external electronic device 213 receives a BIS corresponding to the back left channel, and determines that the fourth external electronic device 214 receives a BIS corresponding to the back right channel. For example, it will be assumed that an index of the BIS corresponding to the front left channel is "1", it will be assumed that an index of the BIS corresponding to the front right channel is "2", it will be assumed that an index of the BIS corresponding to the front center channel is "3", it will be assumed that an index of the BIS corresponding to the back left channel is "4", and it will be assumed that an index of the BIS corresponding to the back right channel is "5". The electronic device 101 may broadcast information indicating that the first external electronic device 211 and the fifth external electronic device 215 need to receive a BIS of index 1, the second external electronic device 212 and the sixth external electronic device 216 need to receive a BIS of index 2, the third external electronic device 213 needs to receive a BIS of index 4, and the fourth external electronic device 214 needs to receive a BIS of index 5.

Each of the first external electronic device 212, the second external electronic device 212, the third external electronic device 213, the fourth external electronic device 214, the fifth external electronic device 215, and/or the sixth external electronic device 216 may receive a corresponding BIS based on information transmitted by the electronic device 101 and output audio data of the received BIS.

In FIG. 2, since the electronic device 101 operating as the assistant device determines that each of the first external electronic device 211 and the fifth external electronic device 215 receives the BIS corresponding to the front left channel, determines that each of the second external electronic device 212 and the sixth external electronic device 216 receives the BIS corresponding to the front right channel, determines that the third external electronic device 213 receives the BIS corresponding to the back left channel, and determines that the fourth external electronic device 214 receives the BIS corresponding to the back right channel, the electronic device 101 operating as the source device may identify that there is no need to broadcast the front center channel among five BISes included in the BIG, and thus may skip generation of audio data corresponding to the front center channel. Here, skipping the generation of the audio data may represent that the audio data is not generated. The source device may identify BISes to broadcast based on determination of the assistant device and generate audio data corresponding to the identified BISes.

In FIG. 2, a case in which the electronic device 101 establishes the connection with the first external electronic device 211, the second external electronic device 212, the third external electronic device 213, the fourth external electronic device 214, the fifth external electronic device 215, and/or the sixth external electronic device 216 has been described as an example, but the electronic device 101 may establish a connection with not only the first external electronic device 211, the second external electronic device 212, the third external electronic device 213, the fourth external electronic device 214, the fifth external electronic device 215, and/or the sixth external electronic device 216, but also with at least one other external electronic device. The electronic device 101, the first external electronic device 211, the second external electronic device 212, the third external electronic device 213, the fourth external electronic device 214, the fifth external electronic device 215, and/or the sixth external electronic device 216 may be electronic devices participating in a multi-party audio service. In an embodiment, a server (e.g., a server 108 in FIG. 1) may be connected to electronic device 101, the first external electronic device 211, the second external electronic device 212, the third external electronic device 213, the fourth external electronic device 214, the fifth external electronic device 215, the sixth external electronic device 216, and/or the at least one other external electronic device, and may perform a management and control operation for the electronic device 101, the first external electronic device 211, the second external electronic device 212, the third external electronic device 213, the fourth external electronic device 214, the fifth external electronic device 215, the sixth external electronic device 216, and/or the at least one other external electronic device.

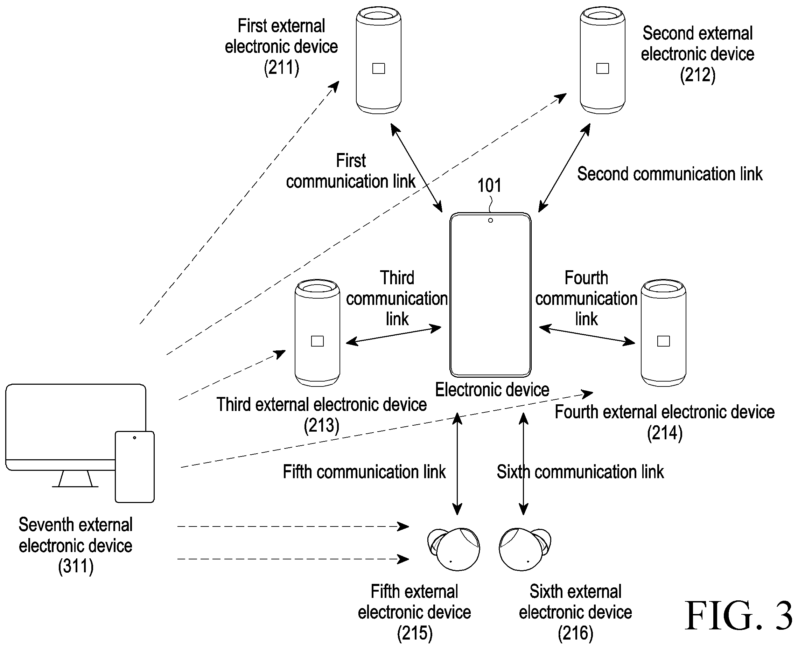

FIG. 3 is a diagram schematically illustrating connections between electronic devices which are based on a Bluetooth scheme in a wireless communication network according to an embodiment.

Referring to FIG. 3, an electronic device 101 (e.g., an electronic device 101 in FIG. 1 or 2) may be wirelessly and/or wiredly connected to a plurality of external electronic devices. The electronic device 101 may be wirelessly connected to the plurality of external electronic devices based on a Bluetooth scheme. The electronic device 101 may be wiredly connected to the plurality of external electronic devices based on a separate protocol. The plurality of external electronic devices (e.g., an electronic device 102 in FIG. 1) may include a first external electronic device 211 (e.g., a first external electronic device 211 in FIG. 2), a second external electronic device 212 (e.g., a second external electronic device 212 in FIG. 2), a third external electronic device 213 (e.g., a third external electronic device 213 in FIG. 2), a fourth external electronic device 214 (e.g., a fourth external electronic device 214 in FIG. 2), a fifth external electronic device 215 (e.g., a fifth external electronic device 215 in FIG. 2), and/or a sixth external electronic device 216 (e.g., a sixth external electronic device 215 in FIG. 2).

For example, the electronic device 101 may be a smartphone. Each of the first external electronic device 211, the second external electronic device 212, the third external electronic device 213, and the fourth external electronic device 214 may be a Bluetooth speaker. The fifth external electronic device 215 may be a first ear bud (e.g., a left ear bud) included in an ear-wearable device, and the sixth external electronic device 216 may be a second ear bud (e.g., a right ear bud) included in the ear-wearable device. A seventh external electronic device 311 may be a TV or another smartphone.

In an embodiment, the electronic device 101, the first external electronic device 211, the second external electronic device 212, the third external electronic device 213, the fourth external electronic device 214, the fifth external electronic device 215, the sixth external electronic device 216, and/or the seventh external electronic device 311 may provide an audio service based on a Bluetooth scheme.

According to an embodiment, the electronic device 101, the first external electronic device 211, the second external electronic device 212, the third external electronic device 213, the fourth external electronic device 214, the fifth external electronic device 215, and/or the sixth external electronic device 216 may establish a connection (e.g., a communication link) with each other, and may transmit and/or receive data (e.g., audio data) with each other via the established connection. For example, each of the electronic device 101, the first external electronic device 211, the second external electronic device 212, the third external electronic device 213, the fourth external electronic device 214, the fifth external electronic device 215, and/or the sixth external electronic device 216 may establish a communication link based on at least one of a Wi-Fi scheme and/or the Bluetooth scheme, but a scheme by which each of the electronic device 101, the first external electronic device 211, the second external electronic device 212, the third external electronic device 213, the fourth external electronic device 214, the fifth external electronic device 215, and/or the sixth external electronic device 216 establish the communication link is not limited to only at least one of the Wi-Fi scheme and/or the Bluetooth scheme. In an embodiment, the electronic device 101, the first external electronic device 211, the second external electronic device 212, the third external electronic device 213, the fourth external electronic device 214, the fifth external electronic device 215, the sixth external electronic device 216, and/or the seventh external electronic device 311 may be synchronized to a BIG.

In an embodiment, the seventh external electronic device 311 may operate as the source device. The source device may be implemented to be similar to or substantially the same as that described in FIG. 2, so a detailed description thereof will be omitted herein.

In an embodiment, the electronic device 101 may operate as the assistant device. The assistant device may be implemented to be similar to or substantially the same as that described in FIG. 2, so a detailed description thereof will be omitted herein. A case in which the electronic device 101 operates as the source device and also operates as the assistant device has been described in FIG. 2, however, the electronic device 101 may operate only as the assistant device in FIG. 3.

Each of the first external electronic device 211, the second external electronic device 212, the third external electronic device 213, the fourth external electronic device 214, the fifth external electronic device 215, and/or the sixth external electronic device 216 may operate as the sink device. The sink device may be implemented to be similar to or substantially the same as that described in FIG. 2, so a detailed description thereof will be omitted herein.

A first communication link may be established between the electronic device 101 and the first external electronic device 211, a second communication link may be established between the electronic device 101 and the second external electronic device 212, a third communication link may be established between the electronic device 101 and the third external electronic device 213, a fourth communication link may be established between the electronic device 101 and the fourth external electronic device 214, a fifth communication link may be established between the electronic device 101 and the fifth external electronic device 215, and a sixth communication link may be established between the electronic device 101 and the sixth external electronic device 216.

In FIG. 3, it will be assumed that the seventh external electronic device 311 operates as the source device, and the electronic device 101 operates as the assistant device. Since the electronic device 101 operates as the assistant device in FIG. 3, the electronic device 101 may determine a BIS which each of the first external electronic device 211, the second external electronic device 212, the third external electronic device 213, the fourth external electronic device 214, the fifth external electronic device 215, and/or the sixth external electronic device 216 will receive. In FIG. 3, it will be assumed that the electronic device 101 which is the assistant device determines that each of the first external electronic device 211 and the fifth external electronic device 215 receives a BIS corresponding to the front left channel, determines that each of the second external electronic device 212 and the sixth external electronic device 216 receives a BIS corresponding to the front right channel, determines that the third external electronic device 213 receives a BIS corresponding to the back left channel, and determines that the fourth external electronic device 214 receives a BIS corresponding to the back right channel. For example, it will be assumed that an index of the BIS corresponding to the front left channel is "1", it will be assumed that an index of the BIS corresponding to the front right channel is "2", it will be assumed that an index of the BIS corresponding to the front center channel is "3", it will be assumed that an index of the BIS corresponding to the back left channel is "4", and it will be assumed that an index of the BIS corresponding to the back right channel is "5". The electronic device 101 may transmit information indicating that the first external electronic device 211 and the fifth external electronic device 215 need to receive a BIS of index 1, the second external electronic device 212 and the sixth external electronic device 216 need to receive a BIS of index 2, the third external electronic device 213 needs to receive a BIS of index 4, and the fourth external electronic device 214 needs to receive a BIS of index 5.

Each of the first external electronic device 212, the second external electronic device 212, the third external electronic device 213, the fourth external electronic device 214, the fifth external electronic device 215, and/or the sixth external electronic device 216 may synchronize with a BIS provided by the seventh external electronic device 311 based on information (e.g., BIG information (BIGInfo)) transmitted by the electronic device 101, receive the synchronized BIS, and output audio data of the received BIS.

In an embodiment, BIGInfo may be included in an auxiliary synchronization indication (AUX_SYNC_IND) protocol data unit (PDU) transmitted (for example, broadcast) by the seventh external electronic device 311, and a detailed description of the AUX_SYNC_IND PDU is specified in section 2.3.1.7 of Bluetooth Core Specification v5.4 provided by Core Specification Working Group, so a redundant description will be omitted herein.

In an embodiment, BIGInfo may be as shown in Table 1 below.

<Table 1>

| BIGInfo | | | | |
|---|---|---|---|---|
| BIG_Offset (14 bits) | BIG_Offset_Units (1 bit) | ISO_Interval (12 bits) | Num_BIS (5 bits) | NSE (5 bits) |

| BIGInfo (Continued) | | | | |
|---|---|---|---|---|
| BN (3 bits) | Sub_Interval (20 bits) | PTO (4 bits) | BIS_Spacing (20 bits) | IRC (4 bits) |

| BIGInfo (Continued) | | | | |
|---|---|---|---|---|
| Max_PDU (8 bits) | RFU (8 bits) | SeedAccessAddress (32 bits) | SDU_Interval (20 bits) | Max_SDU (12 bits) |

| BIGInfo (Continued) | | | | |
|---|---|---|---|---|
| BaseCRCinit (16 bits) | ChM (37 bits) | PHY (3 bits) | bisPayloadCount (39 bits) | Framing (1 bit) |

| BIGInfo (Continued) | |
|---|---|
| | MSB |
| GIV (8 octets) | GSKD (16 octets) |

In Table 1, BIGInfo may be included in an ACAD field of the AUX_SYNC_IND PDU transmitted during a periodic advertising operation. A length of BIGInfo can be 33 octets for an unencrypted BIG and 57 octets for an encrypted BIG.

In Table 1, a BIG_Offset field may include time from a start of a packet including BIGInfo to a BIG anchor point which BIGInfo describes. A value of the BIG_Offset field may be in a unit of time indicated by a BIG_Offset_Units bit, and an actual time offset may be determined by multiplying a value of BIG_Offset by the unit of time indicated by the BIG_Offset_Units bit. The offset may be greater than 600 $\mu$s.

In Table 1, if the BIG_Offset_Units bit is set, the time unit indicated by the BIG_Offset_Units bit may be 300 $\mu$s, and if the BIG_Offset_Units bit is not set, the time unit indicated by the BIG_Offset_Units bit may be 30 $\mu$s. The BIG_Offset_Units bit may not be set if the time offset is less than 491,460 $\mu$s.

In Table 1, the BIG anchor point may not be earlier than the time offset and may not be later than the time offset plus one unit after a start of a relevant packet.

In Table 1, an ISO_Interval field may indicate time between two adjacent BIG anchor points, and may be in a unit of 1.25 ms. A value of the ISO_Interval field may be a value between 4 and 3200 (i.e., 5 ms to 4 s).

In Table 1, a NSE (number of subevent) field may indicate the number of subevents per BIS in each BIG event. A value of the NSE field may be a value between 1 and 31, and may be an integer multiple of BN.

In Table 1, a BN field, a PTO field, and an IRC field may control which data is transmitted in each BIG event. A value of the BN field may be a value between 1 and 7, a value of the PTO field may be a value between 0 and 15, and a value of the IRC field may be a value between 1 and 15.

In Table 1, a Sub_Interval field may indicate time between starts of two consecutive subevents of each BIS, and may be in microseconds.

In Table 1, a BIS_Spacing field may indicate time between starts of corresponding subevents in adjacent BISes in the BIG, and may be in microseconds. Additionally, if a control subevent exists, the BIS_Spacing field may indicate time between a start of a first subevent of the last BIS and a start of the control subevent, and may be in microseconds.

In Table 1, a Num_BIS field may indicate the number of BISes in the BIG.

In Table 1, a Max_PDU field may indicate the maximum number of data octets (including a message integrity check (MIC) if necessary) which may be carried in each BIS data PDU in the BIG. A value of the Max_PDU field may be a value between 1 and 251 octets.

In Table 1, a SeedAccessAddress field may indicate a seed access address (SAA) for the BIG. An access address for a BIS may be derived from the SAA and may be a random number which satisfies the following condition.

$$SAA_{19} = SAA_{15}$$

$$SAA_{22} = SAA_{16} \neq SAA_{15}$$

$$SAA_{25} = 0$$

$$SAA_{23} = 1$$

For any pair of BIGs transmitted by the same device, SAA 15 to SSA 0 may differ in at least two bits.

In Table 1, an SDU_Interval field may be a value between 0x0000FF and 0x0FFFFF, and may be in microseconds.

In Table 1, a Max_SDU field may indicate a maximum size of a service data unit (SDU) in the BIG. A value of the Max_SDU field may be a value between 1 and 4095 octets.

In Table 1, a BaseCRCInit field may indicate a BaseCRCInit value. For every broadcast isochronous PDU, a shift register included in a cyclic redundancy check (CRC) generator may be preset with the BaseCRCInit value from BIGInfo data in the most significant 2 octets and BIS_Number for a specific BIS in the least significant octet.

In Table 1, a ChM field may include a channel map indicating a used data channel and unused data channels. Every channel is represented with a bit allocated according to a data channel index, and a least significant bit (LSB) may represent a data channel index 0 and a bit in a position 36 may represent a data channel index 36. A bit value of 0 may indicate that a channel is unused, and a bit value of 1 may indicate that the channel is used. Bits in a location 37, a location 38, and a location 39 may be reserved for future use.

In Table 1, a PHY field may indicate a physical layer (PHY) used by the BIG, and a value of the PHY field may be specified as shown in Table 2 below.

<Table 2>

| Value | Meaning |
|---|---|
| 0 | LE 1M PHY |
| 1 | LE 2M PHY |
| 2 | LE Coded PHY |
| All other values | Reserved for future use |

In Table 1, a bisPayloadCount field may be used for a first subevent of a BIG event indicated by the BIG_Offset field. For each BIG, payloads may be numbered in an order provided, starting from 0. This number may be used as a value of the bisPayloadCounter field for a PDU including a corresponding payload, for example, a field value of the bisPayloadCount field.

In Table 1, a Framing field may be set if the BIG carries framed data.

In Table 1, if the BIG is encrypted, a GIV field may be a 64-bit parameter, and the GSKD field may be a 128-bit parameter.

A detailed description of BIGInfo is specified in section 4.4.6.11 BIGInfo in Bluetooth Core Specification v5.4, so a detailed description thereof will be omitted herein.

In FIG. 3, a case in which the electronic device 101 establishes the connection with the first external electronic device 211, the second external electronic device 212, the third external electronic device 213, the fourth external electronic device 214, the fifth external electronic device 215, and/or the sixth external electronic device 216 has been described as an example, but the electronic device 101 may establish a connection with not only the first external electronic device 211, the second external electronic device 212, the third external electronic device 213, the fourth external electronic device 214, the fifth external electronic device 215, and/or the sixth external electronic device 216, but also with at least one other external electronic device. The electronic device 101, the first external electronic device 211, the second external electronic device 212, the third external electronic device 213, the fourth external electronic device 214, the fifth external electronic device 215, the sixth external electronic device 216, and/or the seventh external electronic device 311 may be electronic devices participating in a multi-party audio service. In an embodiment, a server (e.g., a server 108 in FIG. 1) may be connected to electronic device 101, the first external electronic device 211, the second external electronic device 212, the third external electronic device 213, the fourth external electronic device 214, the fifth external electronic device 215, the sixth external electronic device 216, the seventh external electronic device 311, and/or the at least one other external electronic device, and may perform a management and control operation for the electronic device 101, the first external electronic device 211, the second external electronic device 212, the third external electronic device 213, the fourth external electronic device 214, the fifth external electronic device 215, the sixth external electronic device 216, the seventh external electronic device 311, and/or the at least one other external electronic device.

In an embodiment, if a connection is established between the electronic device 101 and the seventh external electronic device 311, the number of BISes to be generated by the seventh external electronic device 311 may be determined. The electronic device 101 may determine the number of BISes to be generated by the seventh external electronic device 311 based on the number of external electronic devices which are establishing a connection with the electronic device 101.

In an embodiment, the electronic device 101 may operate as the assistant device and the source device. The electronic device 101 operating as the assistant device and the source device may determine the number of BISes to generate based on the number of external electronic devices which are establishing a connection with the electronic device 101.

In an embodiment, the seventh external electronic device 311 may be a device which transmits (for example, broadcasts) a BIS. In an embodiment, the seventh external electronic device 311 may generate a BIG including a plurality of (e.g., N) BISes. The seventh external electronic device 311 may transmit a plurality of audio channel signals via the plurality of BISes, and a BIS index may be allocated to each BIS. The seventh external electronic device 311 may advertise information related to BISes included in the BIG. In an embodiment, the seventh external electronic device 311 may advertise information related to the BIG and the BISes via periodic advertising.

The electronic device 101 may operate as the assistant device. In an embodiment, the electronic device 101 may monitor information related to BISes transmitted by the seventh external electronic device 311. In an embodiment, the electronic device 101 may determine, based on the monitored information, a BIS which at least one of a plurality of sink devices (e.g., the first external electronic device 211, the second external electronic device 212, the third external electronic device 213, the fourth external electronic device 214, the fifth external electronic device 215, and/or the sixth external electronic device 216) connected to the electronic device 101 will receive. The electronic device 101 may transmit a determined BIS index to a sink device so that the sink device receives the BIS determined by the electronic device 101 and output audio data of an audio channel corresponding to a received BIS. In an embodiment, the electronic device 101 may transmit control information including an index of the sink device and a BIS index determined for the sink device, and the sink device may receive the control information transmitted by the electronic device 101 and receive a BIS corresponding to the BIS index determined by the electronic device 101. In an embodiment, the electronic device 101 may transmit the determined BIS index to the sink device via a connection (e.g., a communication link) established between the electronic device 101 and the sink device. In an embodiment, the electronic device 101 may also change the BIS determined for the at least one of the plurality of sink devices. The electronic device 101 may transmit a changed BIS index to the sink device so that the sink device may receive a BIS changed by the electronic device 101 and output audio data of an audio channel corresponding to the received BIS.

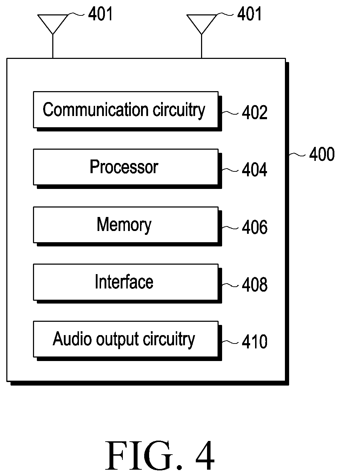

FIG. 4 is a block diagram schematically illustrating an external electronic device in a wireless communication network according to an embodiment.

Referring to FIG. 4, an electronic device 400 (e.g., an electronic device 102 or an electronic device 104 in FIG. 1, a first external electronic device 211 in FIG. 2 or 3, a second external electronic device 212 in FIG. 2 or 3, a third external electronic device 213 in FIG. 2 or 3, a fourth external electronic device 214 in FIG. 2 or 3, a fifth external electronic device 215 in FIG. 2 or 3, a sixth external electronic device 216 in FIG. 2 or 3, and/or a seventh external electronic device 311 in FIG. 3) may be a device implementing a Bluetooth scheme (e.g., a Bluetooth legacy scheme and/or a BLE scheme). The external electronic device 400 may include a communication circuit 402 which transmits and receives signals to and from another electronic device (e.g., the electronic device 101 in FIG. 1 or 2, or a server 108 in FIG, 1), e.g., a peer device by using one or more antennas 401.

The external electronic device 400 may include a processor 404 which may be implemented in one or more single-core processors or one or more multi-core processors, and memory 406 which stores instructions for an operation of the external electronic device 400.

The external electronic device 400 may include an interface module which provides a wired and/or wireless interface for communicating with components outside a network.

According to an embodiment, the external electronic device 400 may include a plurality of communication circuits, one of the plurality of communication circuits may be a communication circuit which is based on a Wi-Fi scheme, and another of the plurality of communication circuits may be a communication circuit which is based on a Bluetooth scheme, e.g., a BLE scheme. According to an embodiment, the plurality of communication circuits may include the communication circuit 402, and the communication circuit 402 may be a communication circuit which is based on the Wi-Fi scheme or a communication circuit which is based on the BLE scheme.

According to an embodiment, the external electronic device 400 does not separately include a communication circuit which is based on the Wi-Fi scheme and a communication circuit which is based on the BLE scheme, and may include one communication circuit capable of supporting both the Wi-Fi scheme and the BLE scheme. According to an embodiment, the one communication circuit capable of supporting both the Wi-Fi scheme and the BLE scheme may be the communication circuit 402.

The Bluetooth scheme may include a Bluetooth legacy (or Bluetooth classic) scheme and/or a Bluetooth low energy (BLE) scheme. An electronic device (e.g., an electronic device 101 in FIG. 1, 2, or 3)(e.g., a smart phone) that provides an audio service based on the BLE scheme may independently establish a communication link (e.g., a CIS) with each of external electronic devices (e.g., an electronic device 102 or an electronic device 104 in FIG. 1, a first external electronic device 211 in FIG. 2 or 3, a second external electronic device 212 in FIG. 2 or 3, a third external electronic device 213 in FIG. 2 or 3, a fourth external electronic device 214 in FIG. 2 or 3, a fifth external electronic device 215 in FIG. 2 or 3, and/or a sixth external electronic device 216 in FIG. 2 or 3), and transmit and receive data to and from the external electronic devices via the established communication link (e.g., a connection-based communication). The electronic device may establish a communication link (e.g., a BIS) and transmit and receive data to and from the external electronic devices via the established communication link (e.g., a broadcast-based communication). Like this, the audio service based on the BLE scheme may be provided via a connection-based CIS or a non-connection-based BIS.

An audio service provided in the BLE scheme may be a next-generation Bluetooth audio service. In a Bluetooth legacy scheme, a Bluetooth basic rate/enhanced data rate (BR/EDR) scheme is used, and an advanced audio distribution profile (A2DP) or a hands-free profile (HFP) is used, whereas in the BLE scheme, a broadcast audio scheme for a multi-stream audio scheme and an audio sharing scheme is used. In the audio sharing scheme, one or more audio packets may be provided to an infinite number of audio sink devices. To support the audio sharing scheme, a BIG and a BIS have been proposed. In the audio sharing scheme, an isochronous broadcaster and a synchronized receiver may be required.

The BIS may be a logical transport used to transfer one or more isochronous data streams to all devices for the BIS within a range. The BIS may include one or more subevents for transmitting isochronous data packets. A subevent may include time durations in which at least one synchronized receiver may receive a broadcast isochronous PDU. The BIS may support transmission of a plurality of new isochronous data packets in every BIS event. There is no acknowledgment protocol for the BIS, so traffic is unidirectional from a broadcasting device.

The BIG may be generated by the isochronous broadcaster. The BIG may include one or more BISes. A plurality of BISes included in the BIG may have a common timing reference based on a broadcaster and may be synchronized in a time domain. For example, a left channel and a right channel of an audio stereo stream, received by separate devices, may need to be rendered simultaneously. The plurality of BISes included in the BIG may be scheduled sequentially or in an interleaved arrangement.

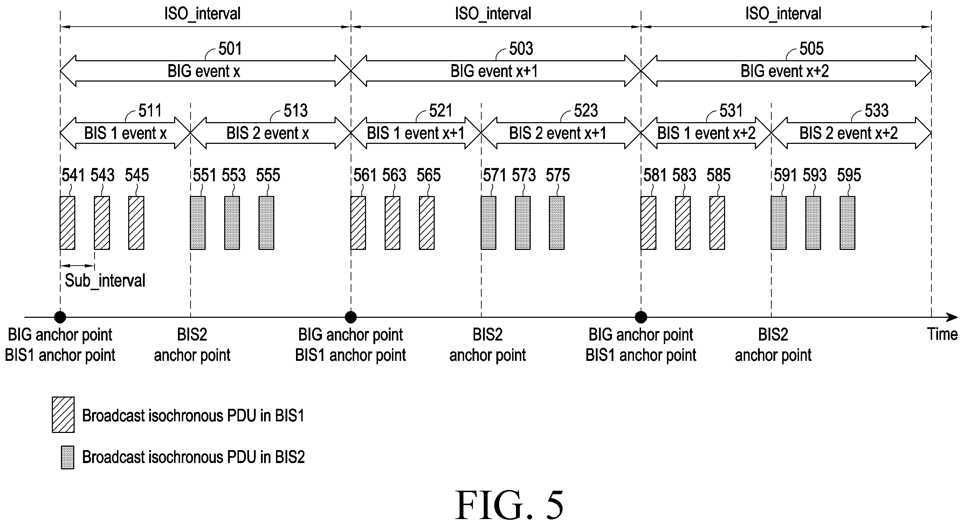

FIG. 5 is a diagram schematically illustrating configuration of BIG events and BIS events in a wireless communication network according to an embodiment.

Referring to FIG. 5, each of BIG events (e.g., a BIG event x 501, a BIG event x+1 503, and a BIG event x+2 503) may include two BIS events. For example, the BIG event x 501 may include a BIS1 event x 511 and a BIS2 event x 513, the BIG event x+1 503 may include a BIS1 event x+1 521 and a BIS2 event x+ 1 523, and the BIG event x+2 505 may include a BIS1 event x+2 531 and a BIS2 event x+2 533.

A BIG event may include one or more BIS protocol data units (PDUs). A link layer may transmit BIS PDUs only in BIG events. The link layer may transmit only BIS PDUs as part of the BIG event. Each BIG event may be divided into Num_BIS BIS events and a control subevent (if present). Each BIS event may be divided into NSE subevents. Each BIS event starts at a moment called BIS anchor point and ends after the last subevent of each BIS event. Each BIG event starts at a moment called BIG anchor point, and ends after one control subevent if there is the one control subevent, and otherwise, at the end of the last constituent BIS event.

BIG anchor points may be spaced regularly at ISO_Intervals. BIS anchor points for a BIS n of a BIG may be (n - 1) X BIS_Spacing after the BIG anchor points, so may be also spaced regularly, ISO_Interval apart. BIS_Spacing may be time between start of subevents in adjacent BISes included in the BIG and also time between start of the first subevent of the last BIS and a control subevent. For example, BIS_Spacing may be a time interval which includes a time interval corresponding to a BIS1 event x and a time interval corresponding to a BIS2 event x. Subevents of each BIS may be Sub_Interval apart. The Isochronous broadcaster may terminate each BIG event at least T_IFS before a BIG anchor point of the next BIG event. T_IFS may represent a time inter frame space and indicate a time interval between consecutive packets on the same channel index.

In the BIS1 event x 511, a broadcast isochronous PDU 541, a broadcast isochronous PDU 543, and a broadcast isochronous PDU 545 may be transmitted.

In the BIS2 event x 513, a broadcast isochronous PDU 551, a broadcast isochronous PDU 553, and a broadcast isochronous PDU 555 may be transmitted.

In the BIS1 event x+1 521, a broadcast isochronous PDU 561, a broadcast isochronous PDU 563, and a broadcast isochronous PDU 565 may be transmitted.

In the BIS2 event x+1 523, a broadcast isochronous PDU 571, a broadcast isochronous PDU 573, and a broadcast isochronous PDU 575 may be transmitted.

In the BIS1 event x+2 531, a broadcast isochronous PDU 581, a broadcast isochronous PDU 583, and a broadcast isochronous PDU 585 may be transmitted.

In the BIS2 event x+2 533, a broadcast isochronous PDU 591, a broadcast isochronous PDU 593, and a broadcast isochronous PDU 595 may be transmitted.

According to an embodiment of the disclosure, an electronic device 101 may comprise communication circuitry (190), at least one processor (120) including processing circuitry, and memory (130) storing instructions.

According to an embodiment of the disclosure, the instructions, when executed by the at least one processor individually or collectively, may cause the electronic device to establish, via the communication circuitry, a connection with at least one external electronic device (102; 104; 211; 212; 213; 214; 215; 216).

According to an embodiment of the disclosure, the instructions, when executed by the at least one processor individually or collectively, may cause the electronic device to determine a broadcast isochronous stream (BIS) to be received by the at least one external electronic device among at least one BIS included in a broadcast isochronous group (BIG).

According to an embodiment of the disclosure, the instructions, when executed by the at least one processor individually or collectively, may cause the electronic device to transmit, via the communication circuitry, control information including an index of the least one external electronic device and an index of the determined BIS.

According to an embodiment of the disclosure, the instructions, when executed by the at least one processor individually or collectively, may cause the electronic device to identify a user input for selecting an audio channel to be received by the at least one external electronic device among the at least one BIS.

According to an embodiment of the disclosure, the instructions, when executed by the at least one processor individually or collectively, may cause the electronic device to, based on the user input, determine a BIS corresponding to the audio channel among the at least one BIS as the BIS to be received by the at least one external electronic device.

According to an embodiment of the disclosure, the instructions, when executed by the at least one processor individually or collectively, may cause the electronic device to obtain, via the communication circuitry, information related to a location of the at least one external electronic device.

According to an embodiment of the disclosure, the instructions, when executed by the at least one processor individually or collectively, may cause the electronic device to, based on the information related to the location of the at least one external electronic device, determine a relative location of the at least one external electronic device with respect to the electronic device.

According to an embodiment of the disclosure, the instructions, when executed by the at least one processor individually or collectively, may cause the electronic device to, based on the relative location, determine the BIS to be received by the at least one external electronic device among the at least one BIS.

According to an embodiment of the disclosure, the instructions, when executed by the at least one processor individually or collectively, may cause the electronic device to, after transmitting the control information, change the BIS to be received by the at least one external electronic device among the at least one BIS to another BIS.

According to an embodiment of the disclosure, the instructions, when executed by the at least one processor individually or collectively, may cause the electronic device to transmit, via the communication circuitry, another control information including an index of the at least one external electronic device and an index of the other BIS.

According to an embodiment of the disclosure, the instructions, when executed by the at least one processor individually or collectively, may cause the electronic device to, after transmitting the control information, identify a user input for changing the audio channel to be received by the at least one external electronic device among the at least one BIS to another audio channel.

According to an embodiment of the disclosure, the instructions, when executed by the at least one processor individually or collectively, may cause the electronic device to, based on the user input, change the BIS to be received by the at least one external electronic device among the at least one BIS to the other BIS which corresponds to the other audio channel.

According to an embodiment of the disclosure, the instructions, when executed by the at least one processor individually or collectively, may cause the electronic device to, after transmitting the control information, obtain, via the communication circuitry, information related to a location of the at least one external electronic device.

According to an embodiment of the disclosure, the instructions, when executed by the at least one processor individually or collectively, may cause the electronic device to, based on the information related to the location of the at least one external electronic device, determine a relative location of the at least one external electronic device with respect to the electronic device.

According to an embodiment of the disclosure, the instructions, when executed by the at least one processor individually or collectively, may cause the electronic device to, based on identifying that the relative location is changed, change the BIS to be received by the at least one external electronic device among the at least one BIS to the other BIS.

According to an embodiment of the disclosure, the instructions, when executed by the at least one processor individually or collectively, may cause the electronic device to skip generation of audio data corresponding to a BIS other than the BIS to be received by the at least one external electronic device among the at least one BIS.

According to an embodiment of the disclosure, the instructions, when executed by the at least one processor individually or collectively, may cause the electronic device to establish a connection with at least one another external electronic device (102; 104; 211; 212; 213; 214; 215; 216).

According to an embodiment of the disclosure, the instructions, when executed by the at least one processor individually or collectively, may cause the electronic device to, after establishing the connection with the at least one other external electronic device, determine a first BIS to be received by the at least one external electronic device and a second BIS to be received by the at least one other external electronic device.

According to an embodiment of the disclosure, the instructions, when executed by the at least one processor individually or collectively, may cause the electronic device to transmit, via the communication circuitry, another control information including the index of the at least one external electronic device and an index of the first BIS, or an index of the at least one other external electronic device and an index of the second BIS.

According to an embodiment of the disclosure, the relative location of the at least one external electronic device with respect to the electronic device may be determined based on at least one of a plurality of short-range communication schemes including at least an ultra wide band (UWB) scheme or a global positioning system (GPS) scheme.

According to an embodiment of the disclosure, an electronic device (102; 104; 211; 212; 213; 214; 215; 216) comprises communication circuitry (402), at least one processor (404) including processing circuitry, and memory (406) storing instructions.

According to an embodiment of the disclosure, the instructions, when executed by the at least one processor individually or collectively, cause the electronic device to establish, via the communication circuitry, a connection with an external electronic device (101).

According to an embodiment of the disclosure, the instructions, when executed by the at least one processor individually or collectively, cause the electronic device to receive, via the communication circuitry, control information including an index of the electronic device and a BIS index, from the external electronic device.

According to an embodiment of the disclosure, the instructions, when executed by the at least one processor individually or collectively, cause the electronic device to, based on the control information, receive a BIS corresponding to the BIS index among at least one BIS included in a BIG.

According to an embodiment of the disclosure, the electronic device may further comprise audio output circuitry (410).

According to an embodiment of the disclosure, the instructions, when executed by the at least one processor individually or collectively, cause the electronic device to output audio data corresponding to the received BIS via the audio output circuitry.

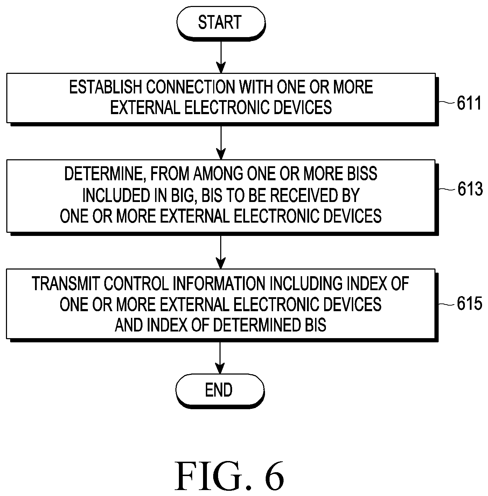

FIG. 6 is a flowchart schematically illustrating an operating method of an electronic device according to an embodiment.

Referring to FIG. 6, an electronic device (e.g., an electronic device 101 in FIG. 1, 2, or 3) (e.g., a processor 120 in FIG. 1) may establish a connection (e.g., a communication link) with at least one external electronic device (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3) via at least one communication circuit (e.g., a communication module 190 in FIG. 1) in operation 611. In an embodiment, the electronic device may operate as a source device and may also operate as an assistant device. The at least one external electronic device may operate as a sink device. The source device, the assistant device, and the sink device may be implemented to be similar to or substantially the same as those described in FIG. 2 or 3, so a detailed description thereof will be omitted herein. In an embodiment, the electronic device may establish the connection with the at least one external electronic device based on at least one of a Wi-Fi scheme and/or a Bluetooth scheme. For example, if there are six external electronic devices (e.g., the first external electronic device 211, the second external electronic device 212, the third external electronic device 213, the fourth external electronic device 214, the fifth external electronic device 215, and/or the sixth external electronic device 216), the electronic device may establish a connection with each of the six external electronic devices.

The electronic device, which establishes the connection with the at least one external electronic device, may, in operation 613, determine a BIS to be received by the at least one external electronic device among at least one BIS included in a BIG generated by the electronic device. In an embodiment, the electronic device may generate the BIG including N BISes, and each of the N BISes may correspond to an audio channel. In an embodiment, the electronic device may generate BISes corresponding to the number of external electronic devices which establish a connection with the electronic device, and thus, N may be the number of the external electronic devices which establish the connection with the electronic device. For example, if the electronic device establishes a connection with five external electronic devices, the electronic device may generate at least one BIS and at most five BISes. For example, the electronic device may generate a BIG including five BISes, and the five BISes may include five audio channels. For example, the five audio channels may include a front left channel, a front right channel, a front center channel, a back left channel, and/or a back right channel. For example, an index of a BIS corresponding to the front left channel may be "1", an index of a BIS corresponding to the front right channel may be "2", an index of a BIS corresponding to the front center channel may be "3", an index of a BIS corresponding to the back left channel may be "4", and an index of a BIS corresponding to the back right channel may be "5". If the electronic device establishes a connection with each of a plurality of external electronic devices, the electronic device may determine a BIS to be received by each of the plurality of external electronic devices. For example, if the electronic device establishes a connection with each of six external electronic devices, and the six external electronic devices receive an audio service (e.g., receive a BIS), the electronic device may determine a BIS to be received by each of the six external electronic devices. In FIG. 6, a case that the electronic device determines the BIS to be received by each of the external electronic devices has been described as an example, but the external electronic devices may also directly determine the BIS which the external electronic devices will receive. For example, if an index of the BIS is set to "0xFFFFFFFF: No preference," the external electronic devices may directly determine the BIS which the external electronic devices will receive. The electronic device, which determines the BIS to be received by the at least one external electronic device among the at least one BIS, may, in operation 615, transmit control information including an index of the at least one external electronic device and an index of the determined BIS via at least one communication circuit. For example, if the electronic device determines a BIS to be received for each of six external electronic devices, the electronic device may generate control information by mapping an index (e.g., a sink device index) of each of the six external electronic devices and an index of the BIS determined for each of the six external electronic devices, and transmit the generated control information via at least one communication circuit. In an embodiment, the control information may be transmitted via the established connection, or may be transmitted via a separate protocol or a separate message.

In FIG. 6, a case that the electronic device establishes the connection with the at least one external electronic device has been described as an example, the electronic device may operate based on a non-connection without establishing the connection with the at least one external electronic device. For example, the electronic device may transmit (for example, broadcast) relevant information via periodic advertising, and the at least one external electronic device may operate by receiving the relevant information via a scan operation.

Meanwhile, although FIG. 6 illustrates an operating method of an electronic device according to an embodiment, it is to be understood that various variations may be made to FIG. 6. For example, although FIG. 6 illustrates sequential operations, it is to be understood that the operations described in FIG. 6 may overlap, occur in parallel, occur in a different order, or occur multiple times.

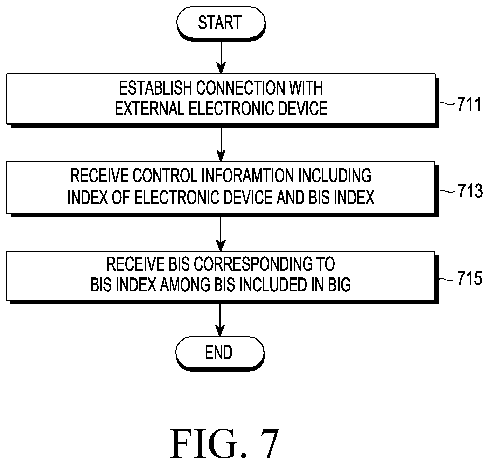

FIG. 7 is a flowchart schematically illustrating an operating method of an electronic device according to an embodiment.

Referring to FIG. 7, an electronic device (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3) (e.g., a processor 404 in FIG. 4) may establish a connection with at an external electronic device (e.g., an electronic device 101 in FIG. 1, 2, or 3) via at least one communication circuit (e.g., communication circuitry 402 in FIG. 4) in operation 711. In an embodiment, the electronic device may operate as a sink device. In an embodiment, the external electronic device may operate as a source device and may also operate as an assistant device. The source device, the assistant device, and the sink device may be implemented to be similar to or substantially the same as those described in FIG. 2 or 3, so a detailed description thereof will be omitted herein. In an embodiment, the electronic device may establish the connection with the external electronic device based on at least one of a Wi-Fi scheme and/or a Bluetooth scheme.

The electronic device, which establishes the connection with the external electronic device, may, in operation 713, receive control information including an index of the electronic device and a BIS index from the external electronic device via the at least one communication circuit. In an embodiment, the control information may be information indicating an index of a BIS to be received by each of sink devices including the electronic device, which is connected to the external electronic device and receives an audio service. In an embodiment, the control information may have a form in which the index of each of the sink devices including the electronic device, which is connected to the external electronic device and receives the audio service, and the index of the BIS to be received by each of the sink devices including the electronic device, which is connected to the external electronic device and receives the audio service, are mapped. In an embodiment, the control information may be received via the established connection, or may be received via a separate protocol or a separate message.

The electronic device, which receives the control information from the external electronic device, may, in operation 715, receive a BIS corresponding to a BIS index mapped to an index of the electronic device included in the control information among at least one BIS included in a BIG based on the control information. For example, the external electronic device may establish a connection not only with the electronic device but also with each of other electronic devices, and if the other electronic devices also receive the audio service via the BIS, the external electronic device may determine a BIS which the electronic device and each of the other electronic devices will receive. In this case, the external electronic device may generate control information in a form in which an index of each of the electronic device and the other electronic devices and a corresponding BIS index are mapped. The electronic device may receive the control information transmitted by the external electronic device, and if the control information includes the index (e.g., a sink index) of the electronic device, the electronic device may receive a BIS corresponding to the BIS index mapped to the index of the electronic device, and output audio data of an audio channel corresponding to the received BIS via audio output circuitry (e.g., audio output circuitry 410 in FIG. 4).

Meanwhile, although FIG. 7 illustrates an operating method of an electronic device according to an embodiment, it is to be understood that various variations may be made to FIG. 7. For example, although FIG. 7 illustrates sequential operations, it is to be understood that the operations described in FIG. 7 may overlap, occur in parallel, occur in a different order, or occur multiple times.

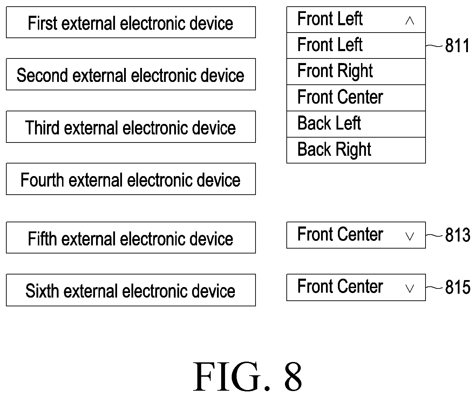

FIG. 8 is a flowchart schematically illustrating a UI for selecting an audio channel outputted by an external electronic device according to an embodiment.

Referring to FIG. 8, an electronic device (e.g., an electronic device 101 in FIG. 1, 2, or 3) may establish a connection (e.g., a communication link) with a plurality of external electronic devices (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3). In an embodiment, the electronic device may operate as an assistant device, and each of the plurality of external electronic devices may operate as a sink device.

The electronic device operating as the assistant device may perform a monitoring operation for periodic advertising to obtain information related to a plurality of BISes transmitted (for example, broadcast) from the source device. The electronic device may output, via a display (e.g., a display module 160 in FIG. 1), a UI including information related to the plurality of BISes obtained via the monitoring operation for the periodic advertising and information related to external electronic devices connected to the electronic device. In an embodiment, the UI may be implemented in a form of selecting an audio channel to be received for each of the external electronic devices connected to the electronic device. If the electronic device operates as the source device while also operating as the assistant device, the electronic device may obtain information related to the plurality of BISes transmitted (for example, broadcast) by the source device without performing the monitoring operation for the periodic advertising, and output the UI including the information related to the plurality of BISes and the information related to the external electronic devices connected to the electronic device.

For example, it will be assumed that six external electronic devices, e.g., the first external electronic device, the second external electronic device, the third external electronic device, the fourth external electronic device, the fifth external electronic device, and the sixth external electronic device are connected to the electronic device, the source device transmits five BISes, and the five BISes correspond to five audio channels, such as a front left channel, a front right channel, a front center channel, a back left channel, and/or a back right channel. In this case, the electronic device may provide a menu for selecting an audio channel which each of the first external electronic device to the sixth external electronic device will receive for each of the first external electronic device to the sixth external electronic device.

In FIG. 8, for example, a UI is illustrated in a case that a list 811 of audio channels selectable by the first external electronic device is displayed, an audio channel is selected (813) for the fifth external electronic device to receive the front center channel, and an audio channel is selected (815) for the sixth external electronic device to receive the front center channel.

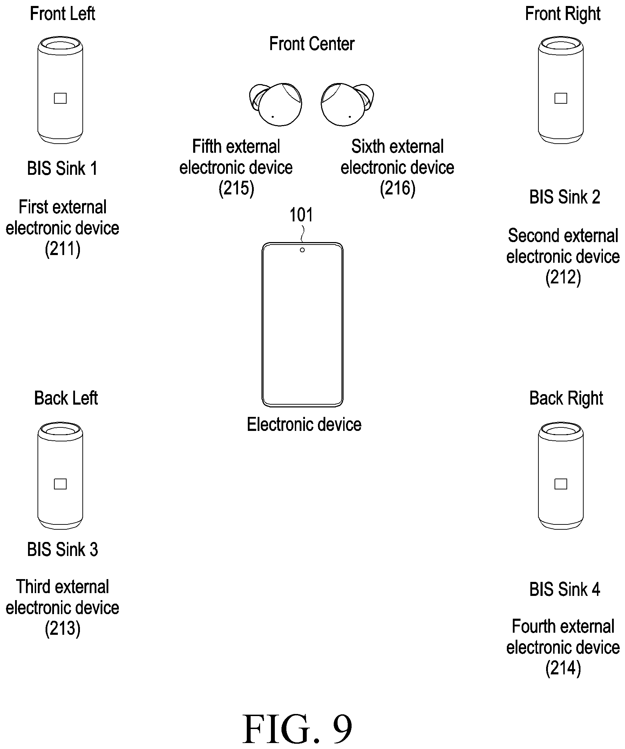

FIG. 9 is a diagram for describing audio channels outputted by a plurality of external electronic devices according to an embodiment.

Referring to FIG. 9, an electronic device 101 (e.g., an electronic device 101 in FIG. 1, 2, or 3) may establish a connection (e.g., a communication link) with a plurality of external electronic devices (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3). In an embodiment, the electronic device 101 may operate as an assistant device, and each of the plurality of external electronic devices may operate as a sink device.

In an embodiment, six external electronic devices, e.g., the first external electronic device 211, the second external electronic device 212, the third external electronic device 213, the fourth external electronic device 214, the fifth external electronic device 215, and the sixth external electronic device 216 are connected to the electronic device 101, the source device transmits five BISes, and the five BISes may correspond to five audio channels, such as a front left channel, a front right channel, a front center channel, a back left channel, and/or a back right channel.

The electronic device 101 may output a UI including information related to a plurality of BISes obtained via a monitoring operation for periodic advertising and information related to external electronic devices connected to the electronic device 101 via a display (e.g., a display module 160 in FIG. 1), and may identify, via the UI, a user input for selecting an audio channel which each external electronic device will receive.

In FIG. 9, a case is shown that an audio channel which the first external electronic device 211 will receive is selected as the front left channel, an audio channel which the second external electronic device 212 will receive is selected as the front right channel, an audio channel which the third external electronic device 213 will receive is selected as the back left channel, an audio channel which the fourth external electronic device 214 will receive is selected as the back right channel, and an audio channel which the fifth external electronic device 215 and the sixth external electronic device 216 will receive is selected as the front center channel, but an audio channel which each external electronic device will receive may not be limited thereto.

In FIG. 9, a case that the connection is established between the electronic device 101 and the six external electronic devices has been described as an example, but if additional external electronic devices are identified, a UI including information related to a plurality of BISes and information related to external electronic devices connected to the electronic device 101 may be outputted by considering the additional external electronic devices, and a user input for selecting an audio channel which each external electronic device will receive may be identified via the UI.

In FIG. 9, the case is shown that the audio channel which the first external electronic device 211 will receive is selected as the front left channel, the audio channel which the second external electronic device 212 will receive is selected as the front right channel, the audio channel which the third external electronic device 213 will receive is selected as the back left channel, the audio channel which the fourth external electronic device 214 will receive is selected as the back right channel, and the audio channel which the fifth external electronic device 215 and the sixth external electronic device 216 will receive is selected as the front center channel, however, if locations of the first external electronic device 211 to the sixth external electronic device 216 are changed, an audio channel received by the first external electronic device 211 to the sixth external electronic device 216 may also vary according to the locations of the first external electronic device 211 to the sixth external electronic device 216.

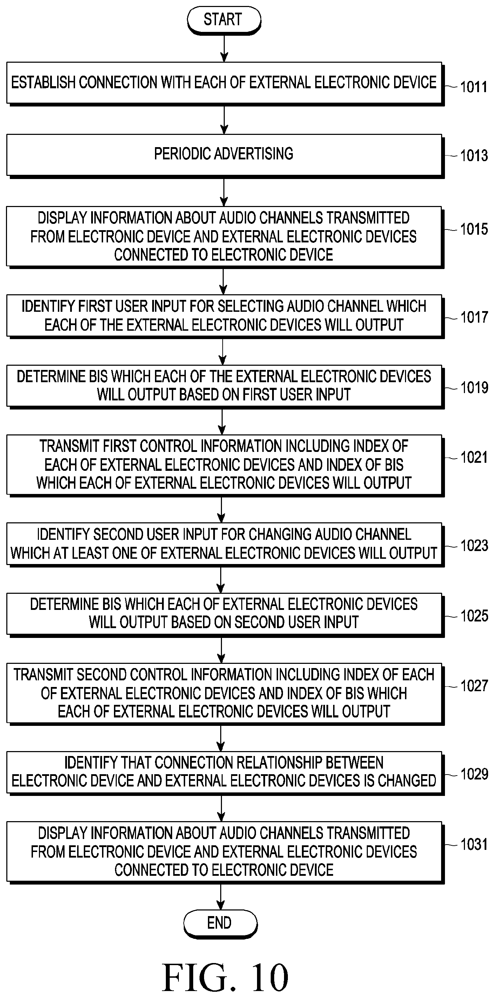

FIG. 10 is a flowchart schematically illustrating an operating method of an electronic device according to an embodiment.

Referring to FIG. 10, an electronic device (e.g., an electronic device 101 in FIG. 1, 2, or 3) (e.g., a processor 120 in FIG. 1) may establish a connection (e.g., a communication link) with each of external electronic devices (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3) in operation 1011. In an embodiment, the electronic device may operate as a source device and may also operate as an assistant device. Each of the external electronic devices may operate as a sink device. The source device, the assistant device, and the sink device may be implemented to be similar to or substantially the same as those described in FIG. 2 or 3, so a detailed description thereof will be omitted herein. In an embodiment, the electronic device may establish the connection with the at least one external electronic device based on at least one of a Wi-Fi scheme and/or a Bluetooth scheme.

The electronic device, which establishes the connection with each of the external electronic devices, may perform a periodic advertising operation in operation 1013. In an embodiment, the electronic device may transmit (for example, broadcast) information related to BISes provided by the electronic device as a source device via the periodic advertising operation. The information related to the BISes provided by the electronic device may be transmitted in a periodic advertising period.

The electronic device, which performs the periodic advertising operation, may, in operation 1015, display information about audio channels transmitted from the electronic device and external electronic devices connected to the electronic device via a display (e.g., a display module 160 in FIG. 1). In an embodiment, the electronic device may configure a BIG including five BISes, and the five BISes may correspond to five audio channels, such as a front left channel, a front right channel, a front center channel, a back left channel, and/or a back right channel. The electronic device may configure a UI including information about six external electronic devices connected to the electronic device and information about five audio channels transmitted from the electronic device, thereby allowing an audio channel which each of the six external electronic devices will output to be selected. The UI including the information about the audio channels transmitted from the electronic device and the external electronic devices connected to the electronic device may be implemented to be similar to or substantially the same as that described in FIG. 8, so a detailed description thereof will be omitted herein.

The electronic device, which displays the information about the audio channels transmitted from the electronic device and the external electronic devices connected to the electronic device, may, in operation 1017, identify a first user input for selecting an audio channel which each of the external electronic devices will output. For example, as described in FIG. 9, the electronic device may identify, via the UI, the first user input in which an audio channel which the first external electronic device will receive is selected as the front left channel, an audio channel which the second external electronic device will receive is selected as the front right channel, an audio channel which the third external electronic device will receive is selected as the back left channel, an audio channel which the fourth external electronic device will receive is selected as the back right channel, and an audio channel which the fifth external electronic device and the sixth external electronic device will receive is selected as the front center channel.

The electronic device, which identifies the first user input for selecting the audio channel which each of the external electronic devices will output, may determine a BIS which each of the external electronic devices will output based on the first user input in operation 1019. In an embodiment, a BIS index may be mapped to each of the BISes included in a BIG. For example, it will be assumed that an index of a BIS corresponding to the front left channel is "1", it will be assumed that an index of a BIS corresponding to the front right channel is "2", it will be assumed that an index of a BIS corresponding to the front center channel is "3", it will be assumed that an index of a BIS corresponding to the back left channel is "4", and it will be assumed that an index of a BIS corresponding to the back right channel is "5".

Based on the first user input in operation 1017, since the audio channel which the first external electronic device will receive is selected as the front left channel, the audio channel which the second external electronic device will receive is selected as the front right channel, the audio channel which the third external electronic device will receive is selected as the back left channel, the audio channel which the fourth external electronic device will receive is selected as the back right channel, and the audio channel which the fifth external electronic device and the sixth external electronic device will receive is selected as the front center channel, the electronic devices may determine the BIS which the first external electronic device will receive as a BIS mapped to the index "1", may determine the BIS which the second external electronic device will receive as a BIS mapped to the index "2", may determine the BIS which the third external electronic device will receive as a BIS mapped to the index "4", may determine the BIS which the fourth external electronic device will receive as the BIS mapped to the index "5", and may determine the BIS which the fifth and sixth external electronic devices will receive as a BIS mapped to the index "3".

Based on the first user input, the electronic device, which determines the BIS which each of the external electronic devices will output, may transmit first control information including an index of each of the external electronic devices and an index of the BIS which each of the external electronic devices will output in operation 1021. Each of the external electronic devices, which receives the first control information, may synchronize to a BIS which the corresponding electronic device provides based on the first control information, receive a synchronized BIS, and output audio data of an audio channel corresponding to the received BIS. In an embodiment, each of the external electronic devices may synchronize to the BIS which the electronic device provides based on BIGInfo included in an AUX_SYNC_IND PDU which the electronic device broadcasts as the electronic device performs a PA operation. The AUX_SYNC_IND PDU and BIGInfo may be implemented to be similar to or substantially the same as those described in FIG. 3 and Table 1, so a detailed description thereof will be omitted herein. While transmitting BISes corresponding to the first control information, and transmitting the first control information, the electronic device may, in operation 1023, identify a second user input for changing an audio channel which the at least one of the external electronic devices will output. In an embodiment, the electronic device may identify the second user input for requesting to change the audio channel which at least one of the external electronic devices will output via a UI which indicates information about audio channels transmitted by the electronic device and external electronic devices connected to the electronic device. For example, in the first user input, the audio channel which the first external electronic device will receive is selected as the front left channel, the audio channel which the second external electronic device will receive is selected as the front right channel, the audio channel which the third external electronic device will receive is selected as the back left channel, the audio channel which the fourth external electronic device will receive is selected as the back right channel, and the audio channel which the fifth external electronic device and the sixth external electronic device will receive is selected as the front center channel, however, it will be assumed that, in the second user input, the audio channel which the first external electronic device will receive selected as the front right channel, the audio channel which the second external electronic device will receive is selected as the front left channel, the audio channel which the third external electronic device will receive is selected as the back right channel, the audio channel which the fourth external electronic device will receive is selected as the back left channel, and the audio channel which the fifth electronic device and the sixth external electronic device will receive is selected as the front center channel.

The electronic device, which identifies the second user input, may determine a BIS which each of the external electronic devices will output based on the second user input in operation 1025.

Based on the second user input in operation 1023, since the audio channel which the first external electronic device will receive selected as the front right channel, the audio channel which the second external electronic device will receive is selected as the front left channel, the audio channel which the third external electronic device will receive is selected as the back right channel, the audio channel which the fourth external electronic device will receive is selected as the back left channel, and the audio channel which the fifth electronic device and the sixth external electronic device will receive is selected as the front center channel, the electronic device may determine the BIS which the first external electronic device will receive as a BIS mapped to the index "2", may determine the BIS which the second external electronic device will receive as a BIS mapped to the index "1", may determine the BIS which the third external electronic device will receive as a BIS mapped to the index "5", may determine the BIS which the fourth external electronic device will receive as the BIS mapped to the index "4", and may determine the BIS which the fifth external electronic device and the sixth external electronic device as a BIS mapped to the index "3".

Based on the second user input, the electronic device, which determines the BIS which each of the external electronic devices will output, may transmit second control information including the index of each of the external electronic devices and an index of the BIS which each of the external electronic devices will output in operation 1027. In an embodiment, the second control information may be generated according to a modify source operation, and the modify source operation may be used for requesting a sink device (e.g., the external electronic devices) to add or update metadata for a source device (e.g., the electronic device), or to synchronize with periodic advertising or a BIS or to stop synchronization with the periodic advertising or the BIS. In an embodiment, the second control information may include at least one of Source_ID, PA_Sync, PA_Interval, Num_Subgroups, BIS_Sync[i], Metadata_Length[i], or Metadata[i], and the index of the BIS which each of the external electronic devices will output may be included in BIS_Sync[i]. A specific description of the source modification operation is specified in Broadcast Audio Scan Service Revision v1.0 which is a standard provided by Generic Audio Working Group, and Source_ID, PA_Sync, PA_Interval, Num_Subgroups, BIS_Sync[i], Metadata_Length[i], or Metadata[i] may be implemented to be similar to or substantially the same as those specified in Broadcast Audio Scan Service Revision v1.0, so a detailed description thereof will be omitted herein.

Each of the external electronic devices, which receives the second control information, may synchronize to a corresponding BIS based on the second control information, receive the synchronized BIS, and output audio data of an audio channel corresponding to the received BIS. In an embodiment, each of the external electronic devices may synchronize to a BIS provided by the electronic device based on BIGInfo included in the AUX_SYNC_IND PDU which the electronic device broadcasts as the electronic device performs the PA operation. The AUX_SYNC_IND PDU and BIGInfo may be implemented to be similar to or substantially the same as those described in FIG. 3 and Table 1, so a detailed description thereof will be omitted herein.

Whie transmitting BISes corresponding to the second control information, and transmitting the second control information, the electronic device may, in operation 1029, identify that a connection relationship between the electronic device and external electronic devices is changed. In an embodiment, a fact that the connection relationship between the electronic device and the external electronic devices is changed may indicate that at least one of the external electronic devices connected to the electronic device release a connection with the electronic device, or that another external electronic device additionally establishes a connection with the electronic device.

The electronic device, which identifies that the connection relationship between the electronic device and the external electronic devices is changed, may display information about audio channels transmitted from the electronic device and external electronic devices connected to the electronic device via the display in operation 1031. Although not illustrated separately, if no additional user input is identified within set time, the electronic device may terminate operation thereof. Alternatively, the electronic device, which displays the information about the audio channels transmitted from the electronic device and the external electronic devices connected to the electronic device, may proceed to operation 1017 and perform subsequent operations repeatedly. In FIG. 10, such as in operation 1031, a case that the electronic device, which identifies that the connection relationship between the electronic device and the external electronic devices is changed, displays the information about the audio channels transmitted from the electronic device and the external electronic devices connected to the electronic device via the display has been described as an example, but operation 1031 may be omitted.

Meanwhile, although FIG. 10 illustrates an operating method of an electronic device according to an embodiment, it is to be understood that various variations may be made to FIG. 10. For example, although FIG. 10 illustrates sequential operations, it is to be understood that the operations described in FIG. 10 may overlap, occur in parallel, occur in a different order, or occur multiple times.

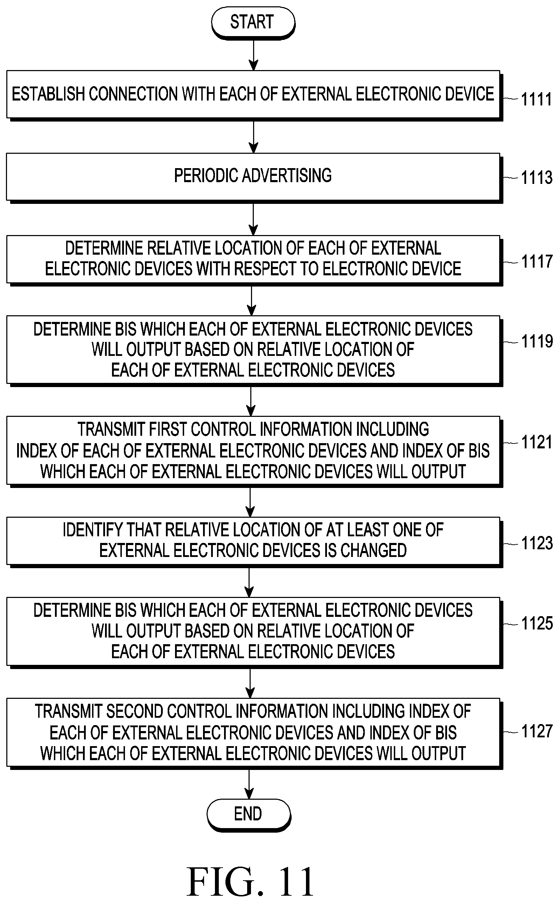

FIG. 11 is a flowchart schematically illustrating an operating method of an electronic device according to an embodiment.

Referring to FIG. 11, an electronic device (e.g., an electronic device 101 in FIG. 1, 2, or 3) (e.g., a processor 120 in FIG. 1) may establish a connection (e.g., a communication link) with each of external electronic devices (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3) in operation 1111. In an embodiment, the electronic device may operate as a source device and may also operate as an assistant device. Each of the external electronic devices may operate as a sink device. The source device, the assistant device, and the sink device may be implemented to be similar to or substantially the same as those described in FIG. 2 or 3, so a detailed description thereof will be omitted herein. In an embodiment, the electronic device may establish the connection with the at least one external electronic device based on at least one of a Wi-Fi scheme and/or a Bluetooth scheme.

The electronic device which establishes the connection with each of the external electronic devices may perform a periodic advertising operation in operation 1113. In an embodiment, the electronic device may transmit (for example, broadcast) information related to BISes provided by the electronic device as a source device via the periodic advertising operation. The information related to the BISes provided by the electronic device may be transmitted via a BLE ADV signal (e.g., a BLE ADV packet) in a periodic advertising period.

The electronic device, which performs the periodic advertising operation, may, in operation 1117, determine a relative location of each of the external electronic devices with respect to the electronic device. The electronic device may determine the relative location of each of the external electronic devices with respect to the electronic device based on an ultra wide band (UWB) scheme and/or a global positioning system (GPS) scheme. In FIG. 11, a case that the electronic device determines a relative location of an external electronic device with respect to the electronic device based on the UWB scheme and/or the GPS scheme has been described as an example, but a scheme for determining the relative location of the external electronic device with respect to the electronic device may not be limited to the UWB scheme and/or the GPS scheme.

The electronic device, which determines the relative location of each of the external electronic devices with respect to the electronic device, may, in operation 1119, determine a BIS which each of the external electronic devices will output based on the determined relative location of each of the external electronic devices. In an embodiment, the electronic device may configure a BIG including five BISes, and the five BISes may correspond to five audio channels, such as a front left channel, a front right channel, a front center channel, a back left channel, and/or a back right channel.

For example, if a relative location of the first external electronic device with respect to the electronic device is a location corresponding to the front left channel, the electronic device may select an audio channel which the first external electronic device will receive as the front left channel, if a relative location of the second external electronic device with respect to the electronic device is a location corresponding to the front right channel, the electronic device selects an audio channel which the second external electronic device will receive as the front right channel, if a relative location of the third external electronic device with respect to the electronic device is a location corresponding to the back left channel, the electronic device may select an audio channel which the third external electronic device will receive as the back left channel, if a relative location of the fourth external electronic device with respect to the electronic device is a location corresponding to the back light channel, the electronic device may select an audio channel which the fourth external electronic device will receive as the back light channel, and if a relative location of each of the fifth external electronic device and the sixth external electronic device with respect to the electronic device is a location corresponding to the front center channel, the electronic device may select an audio channel which the fifth external electronic device and the sixth external electronic device will receive as the front center channel.

After the audio channel which each of the external electronic devices will output is selected, a BIS which each of the external electronic devices will output may be determined based on the selected audio channel. In an embodiment, a BIS index may be mapped to each of the BISes included in a BIG. For example, it will be assumed that an index of a BIS corresponding to the front left channel is "1", it will be assumed that an index of a BIS corresponding to the front right channel is "2", it will be assumed that an index of a BIS corresponding to the front center channel is "3", it will be assumed that an index of a BIS corresponding to the back left channel is "4", and it will be assumed that an index of a BIS corresponding to the back right channel is "5".

Based on the determination in operation 1119, since the audio channel which the first external electronic device will receive is selected as the front left channel, the audio channel which the second external electronic device will receive is selected as the front right channel, the audio channel which the third external electronic device will receive is selected as the back left channel, the audio channel which the fourth external electronic device will receive is selected as the back right channel, and the audio channel which the fifth external electronic device and the sixth external electronic device will receive is selected as the front center channel, the electronic devices may determine the BIS which the first external electronic device will receive as a BIS mapped to the index "1", may determine the BIS which the second external electronic device will receive as a BIS mapped to the index "2", may determine the BIS which the third external electronic device will receive as a BIS mapped to the index "4", may determine the BIS which the fourth external electronic device will receive as the BIS mapped to the index "5", and may determine the BIS which the fifth and sixth external electronic devices will receive as a BIS mapped to the index "3".

Based on the relative location of each of the external electronic devices, the electronic device, which determines the BIS which each of the external electronic devices will output, may transmit first control information including an index of each of the external electronic devices and an index of the BIS which each of the external electronic devices will output in operation 1121. Each of the external electronic devices, which receives the first control information, may synchronize to a corresponding BIS based on the first control information, receive a synchronized BIS, and output audio data of an audio channel corresponding to the received BIS. In an embodiment, each of the external electronic devices may synchronize to the BIS which the electronic device provides based on BIGInfo included in an AUX_SYNC_IND PDU which the electronic device broadcasts as the electronic device performs a PA operation. The AUX_SYNC_IND PDU and BIGInfo may be implemented to be similar to or substantially the same as those described in FIG. 3 and Table 1, so a detailed description thereof will be omitted herein.

While transmitting BISes corresponding to the first control information, and transmitting the first control information, the electronic device may, in operation 1123, identify that the relative location of at least one of the external electronic devices is changed. In an embodiment, while transmitting the first control information, the electronic device may determine a relative location of an external electronic device with respect to the electronic device based on a UWB scheme and/or a GPS scheme, and identify that the relative location of the at least one of the external electronic devices is changed. For example, in operation 1117, the relative location of the first external electronic device has been determined to be the location corresponding to the front left channel, the relative location of the second external electronic device has been determined to be the location corresponding to the front light channel, the relative location of the third external electronic device has been determined to be the location corresponding to the back left channel, the relative location of the fourth external electronic device has been determined to be the location corresponding to the back light channel, and the relative location of each of the fifth external electronic device and the sixth external electronic device has been determined to be the location corresponding to the front center channel, however, in operation 1123, it will be assumed that the relative location of the first external electronic device is a location corresponding to the front light channel, the relative location of the second external electronic device is a location corresponding to the front left channel, the relative location of the third external electronic device is a location corresponding to the back light channel, the relative location of the fourth external electronic device is a location corresponding to the back left channel, and the relative location of each of the fifth external electronic device and the sixth external electronic device is a location corresponding to the front center channel.

The electronic device, which identifies that the relative location of the at least one of the external electronic devices is changed, may, in operation 1125, determine a BIS which each of the external electronic devices will output based on the relative location of each of the external electronic devices. Based on the relative locations in operation 1123, since the audio channel which the first external electronic device will receive selected as the front right channel, the audio channel which the second external electronic device will receive is selected as the front left channel, the audio channel which the third external electronic device will receive is selected as the back right channel, the audio channel which the fourth external electronic device will receive is selected as the back left channel, and the audio channel which the fifth electronic device and the sixth external electronic device will receive is selected as the front center channel, the electronic device may determine the BIS which the first external electronic device will receive as a BIS mapped to the index "2", may determine the BIS which the second external electronic device will receive as a BIS mapped to the index "1", may determine the BIS which the third external electronic device will receive as a BIS mapped to the index "5", may determine the BIS which the fourth external electronic device will receive as the BIS mapped to the index "4", and may determine the BIS which the fifth external electronic device and the sixth external electronic device as a BIS mapped to the index "3".

According to an embodiment, the electronic device may periodically monitor locations of the first external electronic device, the second external electronic device, the third external electronic device, the fourth external electronic device, the fifth external electronic device, and/or the sixth external electronic device, or receive information about a location change (or a location movement) from the first external electronic device, the second external electronic device, the third external electronic device, the fourth external electronic device, the fifth external electronic device, and/or the sixth external electronic device. For example, the electronic device may perform operation 1125 if the locations of the first external electronic device, the second external electronic device, the third external electronic device, the fourth external electronic device, the fifth external electronic device, and/or the sixth external electronic device changes beyond a designated range.

In FIG. 11, a case that the electronic device determines the BIS to be received by each of the external electronic devices has been described as an example, but the external electronic devices may also directly determine the BIS which the external electronic devices will receive. According to an embodiment, if a connection is established among the external electronic devices and an index of the BIS is set to "0xFFFFFFFF: No preference," the external electronic devices may directly determine the BIS which the external electronic devices will receive.

Based on the relative location of each of the external electronic devices, the electronic device, which determines the BIS which each of the external electronic devices will output, may transmit second control information including the index of each of the external electronic devices and an index of the BIS which each of the external electronic devices will output in operation 1127. Each of the external electronic devices, which receives the second control information, may synchronize to a corresponding BIS based on the second control information, receive the synchronized BIS, and output audio data of an audio channel corresponding to the received BIS. In an embodiment, each of the external electronic devices may synchronize to a BIS provided by the electronic device based on BIGInfo included in the AUX_SYNC_IND PDU which the electronic device broadcasts as the electronic device performs the PA operation. The AUX_SYNC_IND PDU and BIGInfo may be implemented to be similar to or substantially the same as those described in FIG. 3 and Table 1, so a detailed description thereof will be omitted herein.

Although not shown separately in FIG. 11, while transmitting BISes corresponding to the second control information, and transmitting the second control information, the electronic device may identify that a connection relationship between the electronic device and external electronic devices is changed. In an embodiment, a fact that the connection relationship between the electronic device and the external electronic devices is changed may indicate that at least one of the external electronic devices connected to the electronic device release a connection with the electronic device, or that another external electronic device additionally establishes a connection with the electronic device. Although not shown separately in FIG. 11, the electronic device, which identifies that a connection relationship between the electronic device and external electronic devices is changed may proceed to operation 1115 and perform subsequent operations repeatedly.

Meanwhile, although FIG. 11 illustrates an operating method of an electronic device according to an embodiment, it is to be understood that various variations may be made to FIG. 11. For example, although FIG. 11 illustrates sequential operations, it is to be understood that the operations described in FIG. 11 may overlap, occur in parallel, occur in a different order, or occur multiple times.

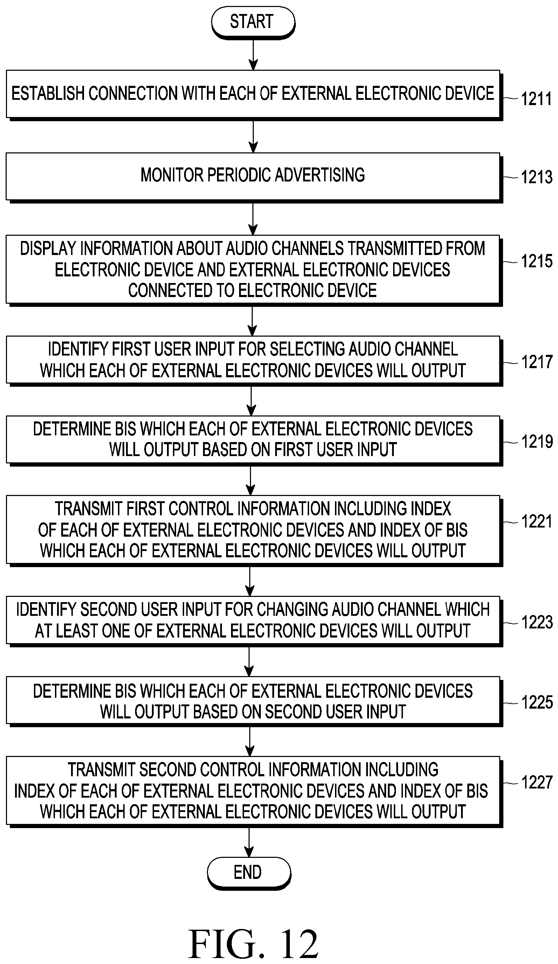

FIG. 12 is a flowchart schematically illustrating an operating method of an electronic device according to an embodiment.

Referring to FIG. 12, an electronic device (e.g., an electronic device 101 in FIG. 1, 2, or 3) (e.g., a processor 120 in FIG. 1) may establish a connection (e.g., a communication link) with each of external electronic devices (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3) in operation 1211. In an embodiment, the electronic device may operate only as an assistant device, and communicate with a separate source device (e.g., a seventh external electronic device 311 in FIG. 3). Each of the external electronic devices may operate as a sink device. The source device, the assistant device, and the sink device may be implemented to be similar to or substantially the same as those described in FIG. 2 or 3, so a detailed description thereof will be omitted herein. In an embodiment, the electronic device may establish the connection with the at least one external electronic device based on at least one of a Wi-Fi scheme and/or a Bluetooth scheme.

The electronic device which establishes the connection with each of the external electronic devices may perform a monitoring operation for periodic advertising in operation 1213. In an embodiment, the seventh external electronic device, which is the source device, may transmit (for example, broadcast) information related to BISes provided by the seventh external electronic device as a source device via the periodic advertising operation. The information related to the BISes provided by the seventh external electronic device may be transmitted via a BLE ADV signal (e.g., a BLE ADV packet) in a periodic advertising period. In an embodiment, the electronic device may configure a BIG including five BISes, and the five BISes may correspond to five audio channels, such as a front left channel, a front right channel, a front center channel, a back left channel, and/or a back right channel.

The electronic device, which performs the monitoring operation for the periodic advertising, may, in operation 1215, display information about audio channels transmitted from the seventh external electronic device and external electronic devices connected to the electronic device via a display (e.g., a display module 160 in FIG. 1). In an embodiment, the seventh external electronic device may transmit (for example, broadcast) audio channel allocation information, and the electronic device may receive the audio channel allocation information and display the information about the audio channels transmitted from the seventh external electronic device. For example, audio channel information may be implemented as follows: "Audio_Channel_Allocation Value: 0x000000003 = 0b00000000000000000000000000000011: Front left, Front right."

The electronic device may configure information about six external electronic devices connected to the electronic device and information about five audio channels transmitted from the seventh external electronic device as a UI, thereby allowing an audio channel which each of the six external electronic devices will output to be selected. The UI including the information about the audio channels transmitted from the seventh external electronic device and the external electronic devices connected to the electronic device may be implemented to be similar to or substantially the same as that described in FIG. 8, so a detailed description thereof will be omitted herein.

The electronic device, which displays the information about the audio channels transmitted from the seventh external electronic device and the external electronic devices connected to the electronic device, may, in operation 1217, identify a first user input for selecting an audio channel which each of the external electronic devices will output. The first user input may be implemented to be similar to or substantially the same as that described in operation 1017 in FIG. 10, so a detailed description thereof will be omitted herein.

The electronic device, which identifies the first user input for selecting the audio channel which each of the external electronic devices will output, may, in operation 1219, determine a BIS which each of the external electronic devices will output based on the first user input. An operation of determining the BIS which each of the external electronic devices will output based on the first user input may be implemented similarly or substantially identically to that described in operation 1019 of FIG. 10, and therefore, a detailed description thereof will be omitted herein.

The electronic device, which determines the BIS which each of the external electronic devices will output based on the first user input, may, in operation 1221, transmit first control information including an index of each of the external electronic devices and an index of the BIS which each of the external electronic devices will output. An operation of transmitting the first control information may be implemented to be similar to or substantially the same as that described in operation 1021 in FIG. 10, so a detailed description thereof will be omitted herein.

While transmitting BISes corresponding to the first control information, and transmitting the first control information, the electronic device may, in operation 1223, identify a second user input for changing an audio channel which the at least one of the external electronic devices will output. The second user input may be implemented to be similar to or substantially the same as that described in operation 1023 in FIG. 10, so a detailed description thereof will be omitted herein.

The electronic device, which identifies the second user input, may determine a BIS which each of the external electronic devices will output based on the second user input in operation 1225. An operation of determining the BIS which each of the external electronic devices will output based on the second user input may be implemented to be similar to or substantially the same as that described in operation 1025 in FIG. 10, so a detailed description thereof will be omitted herein.

Based on the second user input, the electronic device, which determines the BIS which each of the external electronic devices will output, may transmit second control information including the index of each of the external electronic devices and an index of the BIS which each of the external electronic devices will output in operation 1227. An operation of transmitting the second control information including the index of each of the external electronic devices and the index of the BIS which each of the external electronic devices will output may be implemented to be similar to or substantially the same as that described in operation 1027 in FIG. 10, so a detailed description thereof will be omitted herein.

Meanwhile, although FIG. 12 illustrates an operating method of an electronic device according to an embodiment, it is to be understood that various variations may be made to FIG. 12. For example, although FIG. 12 illustrates sequential operations, it is to be understood that the operations described in FIG. 12 may overlap, occur in parallel, occur in a different order, or occur multiple times.

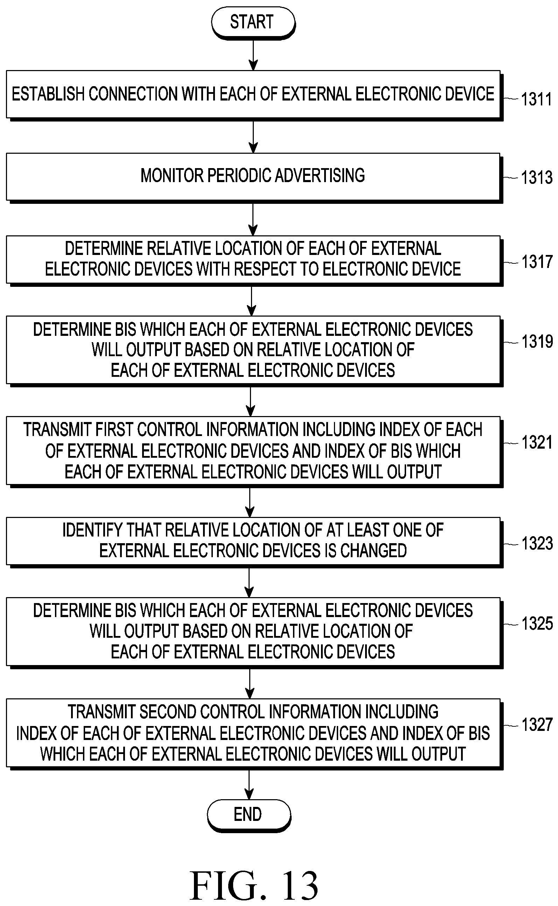

FIG. 13 is a flowchart schematically illustrating an operating method of an electronic device according to an embodiment.

Referring to FIG. 13, an electronic device (e.g., an electronic device 101 in FIG. 1, 2, or 3) (e.g., a processor 120 in FIG. 1) may establish a connection (e.g., a communication link) with each of external electronic devices (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3) in operation 1311. In an embodiment, the electronic device may operate only as an assistant device, and communicate with a separate source device (e.g., a seventh external electronic device 311 in FIG. 3). Each of the external electronic devices may operate as a sink device. The source device, the assistant device, and the sink device may be implemented to be similar to or substantially the same as those described in FIG. 2 or 3, so a detailed description thereof will be omitted herein. In an embodiment, the electronic device may establish the connection with the at least one external electronic device based on at least one of a Wi-Fi scheme and/or a Bluetooth scheme.

The electronic device which establishes the connection with each of the external electronic devices may perform a monitoring operation for periodic advertising in operation 1313. In an embodiment, the seventh external electronic device, which is the source device, may transmit (for example, broadcast) information related to BISes provided by the seventh external electronic device as a source device via the periodic advertising operation. The information related to the BISes provided by the seventh external electronic device may be transmitted via a BLE ADV signal (e.g., a BLE ADV packet) in a periodic advertising period. In an embodiment, the seventh external electronic device may configure a BIG including five BISes, and the five BISes may correspond to five audio channels, such as a front left channel, a front right channel, a front center channel, a back left channel, and/or a back right channel.

The electronic device, which performs the monitoring operation for the periodic advertising, may, in operation 1317, determine a relative location of each of the external electronic devices with respect to the electronic device. A relative location of an external electronic device with respect to the electronic device may be determined based on a UWB scheme and/or a GPS scheme. In FIG. 13, a case that the electronic device determines a relative location of an external electronic device with respect to the electronic device based on the UWB scheme and/or the GPS scheme has been described as an example, but a scheme for determining the relative location of the external electronic device with respect to the electronic device may not be limited to the UWB scheme and/or the GPS scheme.

The electronic device, which determines the relative location of each of the external electronic devices with respect to the electronic device, may, in operation 1319, determine a BIS which each of the external electronic devices will output based on the determined relative location of each of the external electronic devices. An operation of determining the BIS which each of the external electronic devices will output based on the relative location of each of the external electronic devices may be implemented to be similar to or substantially the same as that described in operation 1119 in FIG. 11, so a detailed description thereof will be omitted herein. In FIG. 13, a case that the electronic device determines the BIS which each of the external electronic devices will output based on the relative location of each of the external electronic devices with respect to the electronic device has been described as an example, however, the electronic device may also determine the BIS which each of the external electronic devices will output based on a relative location of each of the external electronic devices with respect to the seventh external electronic device. In this case, the electronic device is required to establish a connection with the seventh external electronic device, and the electronic device may receive information related to the relative location of each of the external electronic devices with respect to the seventh external electronic device from the seventh external electronic device via the connection established between the electronic device and the seventh external electronic device.

Based on the relative location of each of the external electronic devices, the electronic device, which determines the BIS which each of the external electronic devices will output, may transmit first control information including an index of each of the external electronic devices and an index of the BIS which each of the external electronic devices will output in operation 1321. Each of the external electronic devices, which receives the first control information, may synchronize to a corresponding BIS based on the first control information, receive a synchronized BIS, and output audio data of an audio channel corresponding to the received BIS. In an embodiment, each of the external electronic devices may synchronize to the BIS which the seventh external electronic device provides based on BIGInfo included in an AUX_SYNC_IND PDU which the seventh external electronic device broadcasts as the seventh external electronic device performs a PA operation. The AUX_SYNC_IND PDU and BIGInfo may be implemented to be similar to or substantially the same as those described in FIG. 3 and Table 1, so a detailed description thereof will be omitted herein.

While transmitting BISes corresponding to the first control information, and transmitting the first control information, the electronic device may, in operation 1323, identify that the relative location of at least one of the external electronic devices is changed. An operation of identifying that the relative location of the at least one of the external electronic devices is changed may be implemented to be similar to or substantially the same as that described in operation 1123 in FIG. 11, so a detailed description thereof will be omitted herein.

The electronic device, which identifies that the relative location of the at least one of the external electronic devices is changed, may, in operation 1325, determine a BIS which each of the external electronic devices will output based on the relative location of each of the external electronic devices. An operation of determining the BIS which each of the external electronic devices will output based on the relative location of each of the external electronic devices may be implemented to be similar to or substantially the same as that described in operation 1125 in FIG. 11, so a detailed description thereof will be omitted herein.

Based on the relative location of each of the external electronic devices, the electronic device, which determines the BIS which each of the external electronic devices will output, may transmit second control information including the index of each of the external electronic devices and an index of the BIS which each of the external electronic devices will output in operation 1327. Each of the external electronic devices, which receives the second control information, may synchronize to a corresponding BIS based on the second control information, receive the synchronized BIS, and output audio data of an audio channel corresponding to the received BIS. In an embodiment, each of the external electronic devices may synchronize to a BIS provided by the seventh external electronic device based on BIGInfo included in the AUX_SYNC_IND PDU which the seventh external electronic device broadcasts as the seventh external electronic device performs the PA operation. The AUX_SYNC_IND PDU and BIGInfo may be implemented to be similar to or substantially the same as those described in FIG. 3 and Table 1, so a detailed description thereof will be omitted herein.

Meanwhile, although FIG. 13 illustrates an operating method of an electronic device according to an embodiment, it is to be understood that various variations may be made to FIG. 13. For example, although FIG. 13 illustrates sequential operations, it is to be understood that the operations described in FIG. 13 may overlap, occur in parallel, occur in a different order, or occur multiple times.

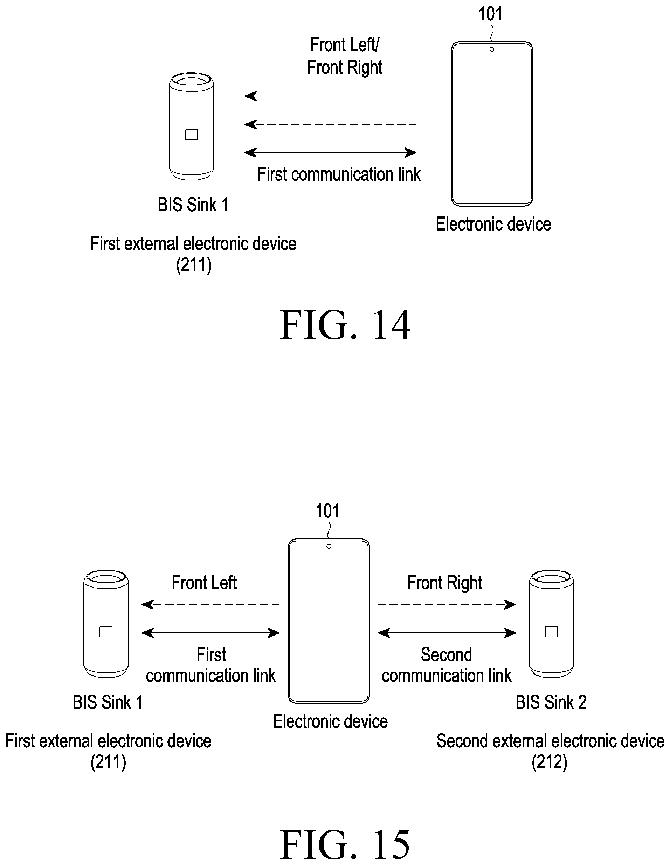

FIG. 14 is a diagram for describing an operation of outputting audio channels in an external electronic device according to an embodiment.

Referring to FIG. 14, an electronic device 101 (e.g., an electronic device 101 in FIG. 1, 2, or 3) may operate as a source device and may also operate as an assistant device. The electronic device 101 may determine whether an external electronic device (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3) connected to the electronic device 101 will receive only one audio channel (for example, will receive only one BIS, or will output only audio data corresponding to one audio channel) or will output a plurality of audio channels (for example, will receive a plurality of BISes, or will output audio data corresponding to the plurality of audio channels).

In FIG. 14, it will be assumed that only one sink device (e.g., the first external electronic device 211) is connected to the electronic device 101 and that the electronic device 101 broadcasts the plurality of audio channels (e.g., two audio channels) (e.g., a front left channel and a front right channel). When identifying that that the number of sink devices connected to the electronic device 101 is one and a corresponding sink device supports all audio locations corresponding to audio channels broadcast by the electronic device 101, the electronic device 101 may transmit control information including an index of the sink device and indices of the BISes so that the sink device may receive the BISes corresponding to the audio channels broadcast by the electronic device 101 without additional separate operation. In an embodiment, the electronic device 101 may identify whether the external electronic devices support only one of the front left channel or the front right channel, or both the front left channel and the front right channel, based on Sink_Audio_Locations information defined in Published Audio Capabilities Service. The electronic device 101 does not need to transmit only audio channel data for an audio channel supported by the external electronic devices, and may also transmit audio channel data for audio channels other than the audio channel supported by the external electronic devices.

For example, in FIG. 14, it will be assumed that only the first external electronic device 211 is connected to the electronic device 101, and that the first external electronic device 211 supports both an audio location corresponding to the front left channel and an audio location corresponding to the front right channel. For example, it will be assumed that a BIS index of the front left channel is "1" and a BIS index of the front right channel is "2". The electronic device 101 may transmit control information including "BIS Sink 1" which is an index of the first external electronic device and indices of BISes, "1" and "2", so that the first external electronic device 211 may receive the front left channel and the front right channel which the electronic device 101 broadcasts. In this case, the first external electronic device 211 may receive the control information, receive the BISes based on the control information, and output audio data corresponding to the received BISes (e.g., audio data corresponding to the front left channel and audio data corresponding to the front right channel).

In this way, if an external electronic device (e.g., the second external electronic device 212) which operates as a sink device is additionally connected to the electronic device 101 while one sink device (e.g., the first external electronic device 211) is connected to the electronic device 101 and the one sink device is playing back all of a plurality of audio channels (e.g., the front left channel and the front right channel), the electronic device 101 may play back only one (e.g., the front left channel) of the plurality of audio channels for an existing sink device, and play back only another (e.g., the front right channel) of the plurality of audio channels for the additionally connected sink device. For example, the electronic device 101 may transmit the control information including "BIS Sink 1" which is an index of the first external electronic device 211, an index "1" of a BIS, "BIS Sink 2" which is an index of the second external electronic device 212, and an index "2" of a BIS. This may be described with reference to FIG. 15 as follows.

FIG. 15 is a diagram for describing an operation of outputting audio channels in an external electronic device according to an embodiment.

Referring to FIG. 15, an electronic device 101 (e.g., an electronic device 101 in FIG. 1, 2, or 3) may operate as a source device and may also operate as an assistant device. The electronic device 101 may determine whether an external electronic device (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2 or 3) connected to the electronic device 101 will receive only one audio channel (for example, will receive only one BIS, or will output only audio data corresponding to one audio channel) or will output a plurality of audio channels (for example, will receive a plurality of BISes, or will output audio data corresponding to the plurality of audio channels).

As described in FIG. 14, when only one sink device (e.g., the first external electronic device 211) is connected to the electronic device 101, and the one sink device receives all BISes corresponding to a plurality of (e.g., two) audio channels (e.g., a front left channel and a front right channel) broadcast by the electronic device 101, an additional sink device may be connected to the electronic device 101. In FIG. 14, it will be assumed that the additional sink device connected to the electronic device 101 is the second external electronic device 212.

In this way, if an external electronic device (e.g., the second external electronic device 212) which operates as a sink device is additionally connected to the electronic device 101 while one sink device (e.g., the first external electronic device 211) is connected to the electronic device 101 and the one sink device is playing back all of a plurality of audio channels (e.g., the front left channel and the front right channel), the electronic device 101 may play back only one (e.g., the front left channel) of the plurality of audio channels for an existing sink device, and play back only another (e.g., the front right channel) of the plurality of audio channels for the additionally connected sink device. For example, the electronic device 101 may determine that the first external electronic device 211 receives a BIS corresponding to the front left channel and may determine that the second external electronic device 212 receives a BIS corresponding to the front right channel. The electronic device 101 may generate control information by mapping "BIS Sink 1" which is an index of the first external electronic device 211 to an index "1" of the BIS, and mapping "BIS Sink 2" which is an index of the second external electronic device 212 to an index "2" of the BIS, and transmit the generated control information so that the first external electronic device 211 may receive the front left channel broadcast by the electronic device 101 and the second external electronic device 212 may receive the front right channel broadcast by the electronic device 101. Each of the first external electronic device 211 and the second external electronic device 212 may receive the control information, receive a corresponding BIS based on the control information, and output audio data corresponding to the received BIS. For example, the first external electronic device 211 may output audio data based on the index "1" of the BIS, and the second external electronic device 212 may output audio data based on the index "2" of the BIS.

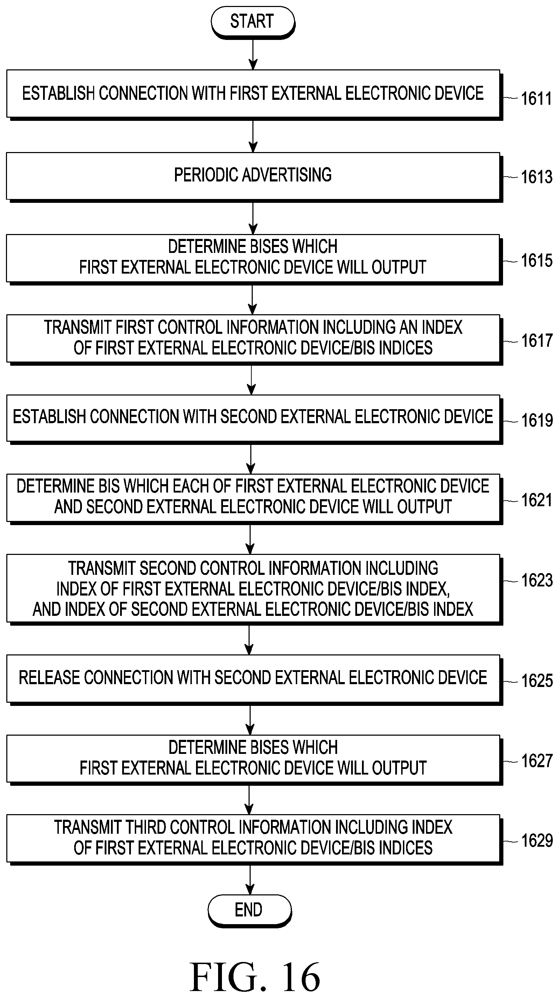

FIG. 16 is a flowchart schematically illustrating an operating method of an electronic device according to an embodiment.

Before describing FIG. 16, an operating method of an electronic device (e.g., an electronic device 101 in FIG. 1, 2, 3, 9, 14, or 15) illustrated in FIG. 16 may be an operating method in a case that the electronic device is connected to an additional external electronic device (e.g., a second external electronic device 212 in FIG. 2, 3, 9, or 15) to transmit BISes while the electronic device, which operates as a source device and also operates as an assistant device as described in FIG. 14, is connected to only one external electronic device (e.g., a first external electronic device 211 in FIG. 2, 3, 9, 14, or 15) to transmit BISes.

Referring to FIG. 16, the electronic device (e.g., a processor 120 in FIG. 1) may establish a connection (e.g., a communication link) with the first external electronic device in operation 1611. In an embodiment, the electronic device may operate as the source device and may also operate as the assistant device. In an embodiment, the first external electronic device may operate as a sink device. The source device, the assistant device, and the sink device may be implemented to be similar to or substantially the same as those described in FIG. 2 or 3, so a detailed description thereof will be omitted herein. In an embodiment, the electronic device may establish the connection with at least one external electronic device based on at least one of a Wi-Fi scheme and/or a Bluetooth scheme.

The electronic device, which establishes the connection with the first external electronic device, may perform a periodic advertising operation in operation 1613. In an embodiment, the electronic device may transmit (for example, broadcast) information related to BISes provided by the electronic device as a source device via the periodic advertising operation. The information related to the BISes provided by the electronic device may be transmitted in a periodic advertising period. In FIG. 16, a case that the electronic device operates as the source device and also operates as the assistant device has been described as an example, however, if the electronic device operates as the assistant device and a separate source device exists, the electronic device, which establishes the connection with the first external electronic device, may perform a monitoring operation for periodic advertising for the source device and broadcast (for example, transmit) information related to BISes which the source device provides.

The electronic device, which performs the periodic advertising operation, may, in operation 1615, identify that only the first external electronic device is connected to the electronic device as the sink device, and identify that the first external electronic device supports all audio locations corresponding to audio channels which the electronic device broadcasts. In this case, the electronic device may determine BISes which the first external electronic device will output as BISes corresponding to all of the audio channels which the electronic device broadcasts.

The electronic device, which determines the BISes which the first external electronic device will output, may, in operation 1617, transmit first control information including an index of the first external electronic device and indices of the determined BISes. For example, it will be assumed that only the first external electronic device is connected to the electronic device 101, and that the first external electronic device 211 supports both an audio location corresponding to the front left channel and an audio location corresponding to the front right channel, and it will be assumed that a BIS index of the front left channel is "1" and a BIS index of the front right channel is "2". The electronic device may transmit control information including "BIS Sink 1" which is an index of the first external electronic device and indices of BISes, "1" and "2", so that the first external electronic device may receive the front left channel and the front right channel which the electronic device broadcasts. In this case, the first external electronic device 211 may receive the first control information, synchronize to the BISes, receive the synchronized BISes based on the first control information, and output audio data corresponding to the received BISes (e.g., audio data corresponding to the front left channel and audio data corresponding to the front right channel). In an embodiment, the first external electronic device may synchronize to BISes provided by the electronic device based on BIGInfo included in the AUX_SYNC_IND PDU which the electronic device broadcasts as the electronic device performs the PA operation. The AUX_SYNC_IND PDU and BIGInfo may be implemented to be similar to or substantially the same as those described in FIG. 3 and Table 1, so a detailed description thereof will be omitted herein.

When only the first external electronic device is connected to the electronic device and the first external electronic device receives all of the BISes corresponding to the audio channels (a front left channel and a front right channel) which the electronic device broadcasts, the electronic device may establish a connection (e.g., a communication link) with the second external electronic device in operation 1619.

The electronic device, which additionally establishes the connection with the second external electronic device, may, in operation 1621, determine a BIS which each of the first external electronic device and the second external electronic device will output. For example, the electronic device may determine that the first external electronic device receives a BIS corresponding to the front left channel and may determine that the second external electronic device receives a BIS corresponding to the front right channel. The electronic device may, in operation 1623, generate second control information by mapping "BIS Sink 1" which is an index of the first external electronic device to an index "1" of the BIS, and mapping "BIS Sink 2" which is an index of the second external electronic device to an index "2" of the BIS, and transmit the generated second control information so that the first external electronic device may receive the front left channel broadcast by the electronic device and the second external electronic device may receive the front right channel broadcast by the electronic device. Each of the first external electronic device and the second external electronic device may receive the second control information, receive a corresponding BIS based on the second control information, synchronize to a corresponding BIS based on the second control information, receive the synchronized BIS, and output audio data corresponding to the received BIS. In an embodiment, each of the first external electronic device and the second external electronic device may synchronize to BISes provided by the electronic device based on BIGInfo included in the AUX_SYNC_1ND PDU which the electronic device broadcasts as the electronic device performs the PA operation. The AUX_SYNC_IND PDU and BIGInfo may be implemented to be similar to or substantially the same as those described in FIG. 3 and Table 1, so a detailed description thereof will be omitted herein.

In this way, while an audio service is being provided for the first external electronic device and the second external electronic device, the electronic device may release the connection with the second external electronic device in operation 1625.

The electronic device, which releases the connection with the second external electronic device, may determine BISes which the first external electronic device will output in operation 1627. In an embodiment, if another external electronic device (e.g., the first external electronic device) is not receiving the audio channel which the second external electronic device is receiving, the electronic device may set to no longer transmit the audio channel which the second external electronic device is receiving.

The electronic device, which determines the BISes which the first external electronic device will output, may transmit third control information including the index of the first external electronic device and indices of the determined BISes in operation 1629. In an embodiment, the third control information may be implemented to be similar to or substantially the same as the first control information in operation 1617, so a detailed description thereof will be omitted herein.

Meanwhile, although FIG. 16 illustrates an operating method of an electronic device according to an embodiment, it is to be understood that various variations may be made to FIG. 16. For example, although FIG. 16 illustrates sequential operations, it is to be understood that the operations described in FIG. 16 may overlap, occur in parallel, occur in a different order, or occur multiple times.

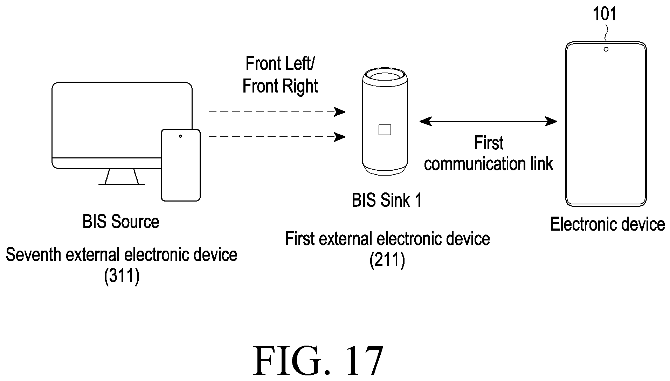

FIG. 17 is a diagram for describing an operation of outputting audio channels in an external electronic device according to an embodiment.

Referring to FIG. 17, an electronic device 101 (e.g., an electronic device 101 in FIG. 1, 2, 3, 9, 14, or 15) may operate as an assistant device. The seventh external electronic device 311 (e.g., a seventh external electronic device 711 in FIG. 3) may operate as a source device. The electronic device 101 may determine whether an external electronic device (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2, 3, or 9) connected to the electronic device 101 will receive only one audio channel (for example, will receive only one BIS, or will output only audio data corresponding to one audio channel) or will output a plurality of audio channels (for example, will receive a plurality of BISes, or will output audio data corresponding to the plurality of audio channels).

In FIG. 17, it will be assumed that only one sink device (e.g., the first external electronic device 211) is connected to the electronic device 101 and that the seventh external electronic device 311 broadcasts the plurality of audio channels (e.g., two audio channels) (e.g., a front left channel and a front right channel). When identifying that that the number of sink devices connected to the electronic device 101 is one and a corresponding sink device supports all audio locations corresponding to audio channels broadcast by the seventh external electronic device 311, the electronic device 101 may transmit control information including an index of the sink device and indices of the BISes so that the sink device may receive the BISes corresponding to the audio channels broadcast by the seventh external electronic device 311 without additional separate operation. In an embodiment, the electronic device 101 may identify whether the external electronic devices support only one of the front left channel or the front right channel, or both the front left channel and the front right channel, based on Sink_Audio_Locations information defined in Published Audio Capabilities Service. The electronic device 101 does not need to transmit only audio channel data for an audio channel supported by the external electronic devices, and may also transmit audio channel data for audio channels other than the audio channel supported by the external electronic devices.

For example, in FIG. 17, it will be assumed that only the first external electronic device 211 is connected to the electronic device 101, and that the first external electronic device 211 supports both an audio location corresponding to the front left channel and an audio location corresponding to the front right channel. For example, it will be assumed that a BIS index of the front left channel is "1" and a BIS index of the front right channel is "2". The electronic device 101 may transmit control information including "BIS Sink 1" which is an index of the first external electronic device and indices of BISes, "1" and "2", so that the first external electronic device 211 may receive the front left channel and the front right channel which the seventh external electronic device 311 broadcasts. In this case, the first external electronic device 211 may receive the control information, receive the BISes based on the control information, and output audio data corresponding to the received BISes (e.g., audio data corresponding to the front left channel and audio data corresponding to the front right channel).

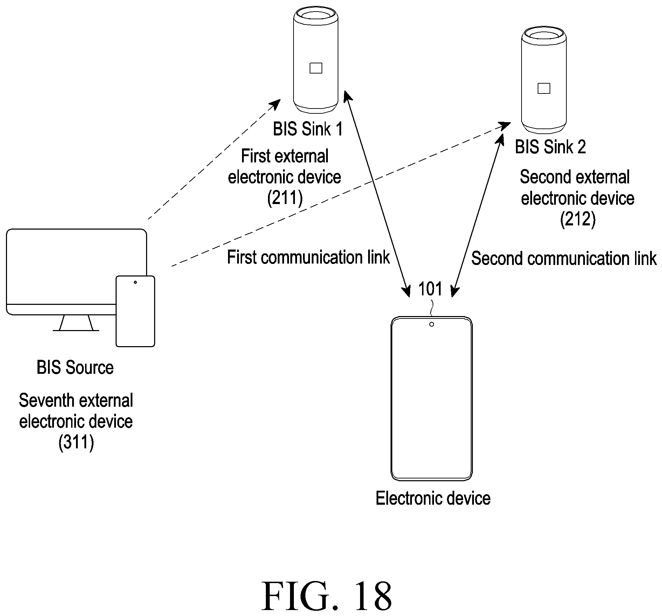

In this way, if an external electronic device (e.g., the second external electronic device 212) which operates as a sink device is additionally connected to the electronic device 101 while one sink device (e.g., the first external electronic device 211) is connected to the electronic device 101 and the one sink device is playing back all of a plurality of audio channels (e.g., the front left channel and the front right channel), the electronic device 101 may play back only one (e.g., the front left channel) of the plurality of audio channels for an existing sink device, and play back only another (e.g., the front right channel) of the plurality of audio channels for the additionally connected sink device. For example, the electronic device 101 may transmit the control information including "BIS Sink 1" which is an index of the first external electronic device 211, an index "1" of a BIS, "BIS Sink 2" which is an index of the second external electronic device 212, and an index "2" of a BIS. This may be described with reference to FIG. 18 as follows.

FIG. 18 is a diagram for describing an operation of outputting audio channels in an external electronic device according to an embodiment.

Referring to FIG. 15, an electronic device 101 (e.g., an electronic device 101 in FIG. 1, 2, 3, 9, 14, 15, or 17) may operate as an assistant device. A seventh external electronic device 311 (e.g., a seventh external electronic device 711 in FIG. 3 or 17) may operate as a source device. The electronic device 101 may determine whether an external electronic device (e.g., an electronic device 102 or an electronic device 104 in FIG. 1, or a first external electronic device 211, a second external electronic device 212, a third external electronic device 213, a fourth external electronic device 214, a fifth external electronic device 215, and/or a sixth external electronic device 216 in FIG. 2, 3, or 9) connected to the electronic device 101 will receive only one audio channel (for example, will receive only one BIS, or will output only audio data corresponding to one audio channel) or will output a plurality of audio channels (for example, will receive a plurality of BISes, or will output audio data corresponding to the plurality of audio channels).

As described in FIG. 17, when only one sink device (e.g., the first external electronic device 211) is connected to the electronic device 101, and the sink device receives all BISes corresponding to a plurality of (e.g., two) audio channels (e.g., a front left channel and a front right channel) broadcast by the electronic device 101, an additional sink device may be connected to the electronic device 101. In FIG. 17, it will be assumed that the additional sink device connected to the electronic device 101 is the second external electronic device 212.

In this way, if an external electronic device (e.g., the second external electronic device 212) which operates as a sink device is additionally connected to the electronic device 101 while one sink device (e.g., the first external electronic device 211) is connected to the electronic device 101 and the one sink device is playing back all of a plurality of audio channels (e.g., the front left channel and the front right channel), the electronic device 101 may play back only one (e.g., the front left channel) of the plurality of audio channels for an existing sink device, and play back only another (e.g., the front right channel) of the plurality of audio channels for the additionally connected sink device. For example, the electronic device 101 may determine that the first external electronic device 211 receives a BIS corresponding to the front left channel and may determine that the second external electronic device 212 receives a BIS corresponding to the front right channel. The electronic device 101 may generate control information by mapping "BIS Sink 1" which is an index of the first external electronic device 211 to an index "1" of the BIS, and mapping "BIS Sink 2" which is an index of the second external electronic device 212 to an index "2" of the BIS, and transmit the generated control information so that the first external electronic device 211 may receive the front left channel broadcast by the seventh external electronic device 311 and the second external electronic device 212 may receive the front right channel broadcast by the seventh external electronic device 311. Each of the first external electronic device 211 and the second external electronic device 212 may receive the control information, receive a corresponding BIS based on the control information, and output audio data corresponding to the received BIS. For example, the first external electronic device 211 may output audio data based on the index "1" of the BIS, and the second external electronic device 212 may output audio data based on the index "2" of the BIS.

In an embodiment of the disclosure, an electronic device (e.g., an electronic device 101 in FIG. 1, 2, 3, 9, 14, 15, 17, or 18) may operate as a source device and may also operate an assistant device. The electronic device may adjust the number of BISes (e.g., audio channels) which the electronic device will transmit (for example, broadcast) based on the number and locations of a plurality of external electronic devices connected to the electronic device. The electronic device, which is the source device, may generate a BIG including up to N BISes and enable external electronic devices to receive up to the N BISes included in the BIG. For example, if the electronic device generates a BIG including five BISes, and additional external electronic devices are connected to the electronic device while the electronic device provides an audio service to the external electronic devices via two BISes, the electronic device may transmit up to five BISes, thereby adding audio channels to provide the audio service. As another example, if the electronic device generates the BIG including the five BISes, and some external electronic devices release a connection with the electronic device while the electronic device provides the audio service to the external electronic devices via the five BISes, the electronic device may add audio channels corresponding to the number of released connections to provide the audio service. As still another example, if a connection between the electronic device and an external electronic device receiving a specific audio channel is released while the electronic device provides the audio channels corresponding to up to five BISes, the electronic device may no longer generate and/or transmit a BIS corresponding to the specific audio channel.

In an embodiment, the electronic device may generate a plurality of audio channels corresponding to the number of external electronic devices connected to the electronic device, and transmit the generated audio channels via corresponding BISes. While transmitting the BISes, if a new external electronic device is connected to the electronic device, the electronic device may determine whether to generate a new audio channel based on location information of the newly connected external electronic device. If it is determined to generate the new audio channel, the electronic device may generate the new audio channel and transmit the generated new audio channel via a BIS. If at least one of the external electronic devices connected to the electronic device is disconnected, the electronic device may identify whether there is another external electronic device receiving the audio channel which the disconnected external electronic device has received. If there is no other external electronic device receiving the audio channel that the disconnected external electronic device has received, the electronic device may no longer transmit the corresponding audio channel, thereby reducing the total amount of BIS data to improve transmission efficiency.

According to an embodiment of the disclosure, a method may comprise establishing a connection with at least one external electronic device (102; 104; 211; 212; 213; 214; 215; 216).

According to an embodiment of the disclosure, the method may comprise determining a BIS to be received by the at least one external electronic device among at least one BIS included in a BIG.

According to an embodiment of the disclosure, the method may comprise transmitting control information including an index of the least one external electronic device and an index of the determined BIS.

According to an embodiment of the disclosure, determining the BIS to be received by the at least one external electronic device among the at least one BIS included in the BIG may comprise identifying a user input for selecting an audio channel to be received by the at least one external electronic device among the at least one BIS.

According to an embodiment of the disclosure, determining the BIS to be received by the at least one external electronic device among the at least one BIS included in the BIG may comprise, based on the user input, determining a BIS corresponding to the audio channel among the at least one BIS as the BIS to be received by the at least one external electronic device.

According to an embodiment of the disclosure, determining the BIS to be received by the at least one external electronic device among the at least one BIS included in the BIG may comprise receiving information related to a location of the at least one external electronic device.

According to an embodiment of the disclosure, determining the BIS to be received by the at least one external electronic device among the at least one BIS included in the BIG may comprise, based on the information related to the location of the at least one external electronic device, determine a relative location of the at least one external electronic device with respect to an electronic device (101).

According to an embodiment of the disclosure, determining the BIS to be received by the at least one external electronic device among the at least one BIS included in the BIG may comprise, based on the relative location, determining the BIS to be received by the at least one external electronic device among the at least one BIS.

According to an embodiment of the disclosure, the method may comprise changing the BIS to be received by the at least one external electronic device among the BIS to another BIS.

According to an embodiment of the disclosure, the method may comprise transmitting another control information including an index of the at least one external electronic device and an index of the other BIS.

According to an embodiment of the disclosure, the method may comprise, after transmitting the control information, identifying a user input for changing the audio channel to be received by the at least one external electronic device among the at least one BIS to another audio channel.

According to an embodiment of the disclosure, the method may comprise, based on the user input, changing the BIS to be received by the at least one external electronic device among the at least one BIS to the other BIS which corresponds to the other audio channel.

According to an embodiment of the disclosure, the method may comprise, after transmitting the control information, receiving information related to a location of the at least one external electronic device.

According to an embodiment of the disclosure, the method may comprise, after transmitting the control information, receiving information related to a location of the at least one external electronic device.

According to an embodiment of the disclosure, the method may comprise, based on the information related to the location of the at least one external electronic device, determining a relative location of the at least one external electronic device with respect to the electronic device.

According to an embodiment of the disclosure, the method may comprise, based on identifying that the relative location is changed, changing the BIS to be received by the at least one external electronic device among the at least one BIS to the other BIS.

According to an embodiment of the disclosure, the method may comprise skipping generation of audio data corresponding to a BIS other than the BIS to be received by the at least one external electronic device among the at least one BIS.

According to an embodiment of the disclosure, the method may comprise establishing a connection with at least one another external electronic device (102; 104; 211; 212; 213; 214; 215; 216).

According to an embodiment of the disclosure, the method may comprise, after establishing the connection with the at least one other external electronic device, determining a first BIS to be received by the at least one external electronic device and a second BIS to be received by the at least one other external electronic device.

According to an embodiment of the disclosure, the method may comprise transmitting another control information including the index of the at least one external electronic device and an index of the first BIS, or an index of the at least one other external electronic device and an index of the second BIS.

According to an embodiment of the disclosure, the relative location of the at least one external electronic device with respect to the electronic device may be determined based on at least one of a plurality of short-range communication schemes including at least an UWB scheme or a GPS scheme.

According to an embodiment of the disclosure, a storage medium storing at least one computer-readable instruction may be provided.

According to an embodiment of the disclosure, the at least one instruction, when executed by at least one processor (120) including processing circuitry of an electronic device (101) individually or collectively, may cause the electronic device (101) to perform at least one operation.

According to an embodiment of the disclosure, the at least one operation may comprise establishing a connection with at least one external electronic device (102; 104; 211; 212; 213; 214; 215; 216).

According to an embodiment of the disclosure, the at least one operation may comprise determining a broadcast isochronous stream (BIS) to be received by the at least one external electronic device among at least one BIS included in a broadcast isochronous group (BIG).

According to an embodiment of the disclosure, the at least one operation may comprise transmitting control information including an index of the least one external electronic device and an index of the determined BIS.

**Claims**

1. An electronic device (101), comprising:

   communication circuitry (190);
   at least one processor (120) including processing circuitry; and
   memory (130) storing instructions that, when executed by the at least one processor individually or collectively, cause the electronic device to:

   establish, via the communication circuitry, a connection with at least one external electronic device (102; 104; 211; 212; 213; 214; 215; 216),
   determine a broadcast isochronous stream (BIS) to be received by the at least one external electronic device among at least one BIS included in a broadcast isochronous group (BIG), and
   transmit, via the communication circuitry, control information including an index of the least one external electronic device and an index of the determined BIS.

2. The electronic device of claim 1, wherein the instructions that, when executed by the at least one processor individually or collectively, cause the electronic device to:

   identify a user input for selecting an audio channel to be received by the at least one external electronic device among the at least one BIS, and
   based on the user input, determine a BIS corresponding to the audio channel among the at least one BIS as the BIS to be received by the at least one external electronic device.

3. The electronic device of claim 1, wherein the instructions that, when executed by the at least one processor individually or collectively, cause the electronic device to:

   obtain, via the communication circuitry, information related to a location of the at least one external electronic device,
   based on the information related to the location of the at least one external electronic device, determine a relative location of the at least one external electronic device with respect to the electronic device, and
   based on the relative location, determine the BIS to be received by the at least one external electronic device among the at least one BIS.

4. The electronic device of any one of claims 1 to 3, wherein the instructions that, when executed by the at least one processor individually or collectively, cause the electronic device to:

   after transmitting the control information, change the BIS to be received by the at least one external electronic device among the at least one BIS to another BIS, and
   transmit, via the communication circuitry, another control information including an index of the at least one external electronic device and an index of the other BIS.

5. The electronic device of claim 4, wherein the instructions that, when executed by the at least one processor individually or collectively, cause the electronic device to:

after transmitting the control information, identify a user input for changing the audio channel to be received by the at least one external electronic device among the at least one BIS to another audio channel, and
based on the user input, change the BIS to be received by the at least one external electronic device among the at least one BIS to the other BIS which corresponds to the other audio channel.

6. The electronic device of claim 4, wherein the instructions that, when executed by the at least one processor individually or collectively, cause the electronic device to:

after transmitting the control information, obtain, via the communication circuitry, information related to a location of the at least one external electronic device,
based on the information related to the location of the at least one external electronic device, determine a relative location of the at least one external electronic device with respect to the electronic device, and
based on identifying that the relative location is changed, change the BIS to be received by the at least one external electronic device among the at least one BIS to the other BIS.

7. The electronic device of any one of claims 1 to 6, wherein the instructions that, when executed by the at least one processor individually or collectively, cause the electronic device to:
skip generation of audio data corresponding to a BIS other than the BIS to be received by the at least one external electronic device among the at least one BIS.

8. The electronic device of any one of claims 1 to 7, wherein the instructions that, when executed by the at least one processor individually or collectively, cause the electronic device to:

establish a connection with at least one another external electronic device (102; 104; 211; 212; 213; 214; 215; 216),
after establishing the connection with the at least one other external electronic device, determine a first BIS to be received by the at least one external electronic device and a second BIS to be received by the at least one other external electronic device, and
transmit, via the communication circuitry, another control information including the index of the at least one external electronic device and an index of the first BIS, or an index of the at least one other external electronic device and an index of the second BIS.

9. An electronic device (102; 104; 211; 212; 213; 214; 215; 216), comprising:

communication circuitry (402);
at least one processor (404) including processing circuitry; and
memory (406) storing instructions that, when executed by the at least one processor individually or collectively, cause the electronic device to:

establish, via the communication circuitry, a connection with an external electronic device (101),
receive, via the communication circuitry, control information including an index of the electronic device and a broadcast isochronous stream (BIS) index, from the external electronic device, and
based on the control information, receive a BIS corresponding to the BIS index among at least one BIS included in a broadcast isochronous group (BIG).

10. The electronic device of claim 9, further comprising:

audio output circuitry (410),
wherein the instructions that, when executed by the at least one processor individually or collectively, cause the electronic device to:
output audio data corresponding to the received BIS via the audio output circuitry.

11. A method, comprising:

establishing a connection with at least one external electronic device (102; 104; 211; 212; 213; 214; 215; 216);

determining a broadcast isochronous stream (BIS) to be received by the at least one external electronic device among at least one BIS included in a broadcast isochronous group (BIG); and

transmitting control information including an index of the least one external electronic device and an index of the determined BIS.

12. The method of claim 11, wherein determining the BIS to be received by the at least one external electronic device among the at least one BIS included in the BIG comprises:

identifying a user input for selecting an audio channel to be received by the at least one external electronic device among the at least one BIS; and

based on the user input, determining a BIS corresponding to the audio channel among the at least one BIS as the BIS to be received by the at least one external electronic device.

13. The method of claim 11, wherein determining the BIS to be received by the at least one external electronic device among the at least one BIS included in the BIG comprises:

receiving information related to a location of the at least one external electronic device;

based on the information related to the location of the at least one external electronic device, determine a relative location of the at least one external electronic device with respect to an electronic device (101); and

based on the relative location, determining the BIS to be received by the at least one external electronic device among the at least one BIS.

14. The method of any one of claims 11 to 13, further comprising:

after transmitting the control information, changing the BIS to be received by the at least one external electronic device among the at least one BIS to another BIS; and

transmitting another control information including an index of the at least one external electronic device and an index of the other BIS.

15. The method of any one of claims 11 to 14, further comprising:

establishing a connection with at least one another external electronic device (102; 104; 211; 212; 213; 214; 215; 216);

after establishing the connection with the at least one other external electronic device, determining a first BIS to be received by the at least one external electronic device and a second BIS to be received by the at least one other external electronic device; and

transmitting another control information including the index of the at least one external electronic device and an index of the first BIS, or an index of the at least one other external electronic device and an index of the second BIS.

FIG. 1

EP 4 757 362 A1

First external electronic device
(211)

Second external electronic device
(212)

First communication link

Second communication link

101

Third
communication link

fourth
communication link

Electronic device

Third external electronic device
(213)

Fourth external electronic device
(214)

Fifth communication link

Sixth communication link

Fifth external
electronic device
(215)

Sixth external
electronic device
(216)

FIG. 2

**First external electronic device (211)**

**Second external electronic device (212)**

First communication link

Second communication link

101

Third communication link

Fourth communication link

**Third external electronic device (213)**

Electronic device

**Fourth external electronic device (214)**

**Seventh external electronic device (311)**

Fifth communication link

Sixth communication link

**Fifth external electronic device (215)**

**Sixth external electronic device (216)**

FIG. 3

FIG. 4

FIG. 5

EP 4 757 362 A1

START

ESTABLISH CONNECTION WITH ONE OR MORE
EXTERNAL ELECTRONIC DEVICES — 611

DETERMINE, FROM AMONG ONE OR MORE BISS
INCLUDED IN BIG, BIS TO BE RECEIVED BY
ONE OR MORE EXTERNAL ELECTRONIC DEVICES — 613

TRANSMIT CONTROL INFORMATION INCLUDING INDEX OF
ONE OR MORE EXTERNAL ELECTRONIC DEVICES
AND INDEX OF DETERMINED BIS — 615

END

# FIG. 6

START

ESTABLISH CONNECTION WITH
EXTERNAL ELECTRONIC DEVICE ──711

RECEIVE CONTROL INFORAMTION INCLUDING
INDEX OF ELECTRONIC DEVICE AND BIS INDEX ──713

RECEIVE BIS CORRESPONDING TO
BIS INDEX AMONG BIS INCLUDED IN BIG ──715

END

# FIG. 7

| First external electronic device | | Front Left | ∧ |
|---|---|---|---|

| | | Front Left | |
|---|---|---|---|
| Second external electronic device | | Front Right | |
| | | Front Center | |
| Third external electronic device | | Back Left | |
| | | Back Right | |
| Fourth external electronic device | | | |

~811

| Fifth external electronic device | | Front Center | ∨ | ~813 |
|---|---|---|---|---|

| Sixth external electronic device | | Front Center | ∨ | ~815 |
|---|---|---|---|---|

# FIG. 8

Front Left

BIS Sink 1

First external
electronic device
(211)

Front Center

Fifth external
electronic device
(215)

Sixth external
electronic device
(216)

101

Electronic device

Front Right

BIS Sink 2

Second external
electronic device
(212)

Back Left

BIS Sink 3

Third external
electronic device
(213)

Back Right

BIS Sink 4

Fourth external
electronic device
(214)

FIG. 9

START

ESTABLISH CONNECTION WITH EACH OF EXTERNAL ELECTRONIC DEVICE — 1011

PERIODIC ADVERTISING — 1013

DISPLAY INFORMATION ABOUT AUDIO CHANNELS TRANSMITTED FROM ELECTRONIC DEVICE AND EXTERNAL ELECTRONIC DEVICES CONNECTED TO ELECTRONIC DEVICE — 1015

IDENTIFY FIRST USER INPUT FOR SELECTING AUDIO CHANNEL WHICH EACH OF THE EXTERNAL ELECTRONIC DEVICES WILL OUTPUT — 1017

DETERMINE BIS WHICH EACH OF THE EXTERNAL ELECTRONIC DEVICES WILL OUTPUT BASED ON FIRST USER INPUT — 1019

TRANSMIT FIRST CONTROL INFORMATION INCLUDING INDEX OF EACH OF EXTERNAL ELECTRONIC DEVICES AND INDEX OF BIS WHICH EACH OF EXTERNAL ELECTRONIC DEVICES WILL OUTPUT — 1021

IDENTIFY SECOND USER INPUT FOR CHANGING AUDIO CHANNEL WHICH AT LEAST ONE OF EXTERNAL ELECTRONIC DEVICES WILL OUTPUT — 1023

DETERMINE BIS WHICH EACH OF EXTERNAL ELECTRONIC DEVICES WILL OUTPUT BASED ON SECOND USER INPUT — 1025

TRANSMIT SECOND CONTROL INFORMATION INCLUDING INDEX OF EACH OF EXTERNAL ELECTRONIC DEVICES AND INDEX OF BIS WHICH EACH OF EXTERNAL ELECTRONIC DEVICES WILL OUTPUT — 1027

IDENTIFY THAT CONNECTION RELATIONSHIP BETWEEN ELECTRONIC DEVICE AND EXTERNAL ELECTRONIC DEVICES IS CHANGED — 1029

DISPLAY INFORMATION ABOUT AUDIO CHANNELS TRANSMITTED FROM ELECTRONIC DEVICE AND EXTERNAL ELECTRONIC DEVICES CONNECTED TO ELECTRONIC DEVICE — 1031

END

FIG. 10

START

ESTABLISH CONNECTION WITH EACH OF EXTERNAL ELECTRONIC DEVICE — 1111

PERIODIC ADVERTISING — 1113

DETERMINE RELATIVE LOCATION OF EACH OF EXTERNAL ELECTRONIC DEVICES WITH RESPECT TO ELECTRONIC DEVICE — 1117

DETERMINE BIS WHICH EACH OF EXTERNAL ELECTRONIC DEVICES WILL OUTPUT BASED ON RELATIVE LOCATION OF EACH OF EXTERNAL ELECTRONIC DEVICES — 1119

TRANSMIT FIRST CONTROL INFORMATION INCLUDING INDEX OF EACH OF EXTERNAL ELECTRONIC DEVICES AND INDEX OF BIS WHICH EACH OF EXTERNAL ELECTRONIC DEVICES WILL OUTPUT — 1121

IDENTIFY THAT RELATIVE LOCATION OF AT LEAST ONE OF EXTERNAL ELECTRONIC DEVICES IS CHANGED — 1123

DETERMINE BIS WHICH EACH OF EXTERNAL ELECTRONIC DEVICES WILL OUTPUT BASED ON RELATIVE LOCATION OF EACH OF EXTERNAL ELECTRONIC DEVICES — 1125

TRANSMIT SECOND CONTROL INFORMATION INCLUDING INDEX OF EACH OF EXTERNAL ELECTRONIC DEVICES AND INDEX OF BIS WHICH EACH OF EXTERNAL ELECTRONIC DEVICES WILL OUTPUT — 1127

END

FIG. 11

START

ESTABLISH CONNECTION WITH EACH OF EXTERNAL ELECTRONIC DEVICE ── 1211

MONITOR PERIODIC ADVERTISING ── 1213

DISPLAY INFORMATION ABOUT AUDIO CHANNELS TRANSMITTED FROM ELECTRONIC DEVICE AND EXTERNAL ELECTRONIC DEVICES CONNECTED TO ELECTRONIC DEVICE ── 1215

IDENTIFY FIRST USER INPUT FOR SELECTING AUDIO CHANNEL WHICH EACH OF EXTERNAL ELECTRONIC DEVICES WILL OUTPUT ── 1217

DETERMINE BIS WHICH EACH OF EXTERNAL ELECTRONIC DEVICES WILL OUTPUT BASED ON FIRST USER INPUT ── 1219

TRANSMIT FIRST CONTROL INFORMATION INCLUDING INDEX OF EACH OF EXTERNAL ELECTRONIC DEVICES AND INDEX OF BIS WHICH EACH OF EXTERNAL ELECTRONIC DEVICES WILL OUTPUT ── 1221

IDENTIFY SECOND USER INPUT FOR CHANGING AUDIO CHANNEL WHICH AT LEAST ONE OF EXTERNAL ELECTRONIC DEVICES WILL OUTPUT ── 1223

DETERMINE BIS WHICH EACH OF EXTERNAL ELECTRONIC DEVICES WILL OUTPUT BASED ON SECOND USER INPUT ── 1225

TRANSMIT SECOND CONTROL INFORMATION INCLUDING INDEX OF EACH OF EXTERNAL ELECTRONIC DEVICES AND INDEX OF BIS WHICH EACH OF EXTERNAL ELECTRONIC DEVICES WILL OUTPUT ── 1227

END

FIG. 12

START

ESTABLISH CONNECTION WITH EACH OF EXTERNAL ELECTRONIC DEVICE — 1311

MONITOR PERIODIC ADVERTISING — 1313

DETERMINE RELATIVE LOCATION OF EACH OF EXTERNAL ELECTRONIC DEVICES WITH RESPECT TO ELECTRONIC DEVICE — 1317

DETERMINE BIS WHICH EACH OF EXTERNAL ELECTRONIC DEVICES WILL OUTPUT BASED ON RELATIVE LOCATION OF EACH OF EXTERNAL ELECTRONIC DEVICES — 1319

TRANSMIT FIRST CONTROL INFORMATION INCLUDING INDEX OF EACH OF EXTERNAL ELECTRONIC DEVICES AND INDEX OF BIS WHICH EACH OF EXTERNAL ELECTRONIC DEVICES WILL OUTPUT — 1321

IDENTIFY THAT RELATIVE LOCATION OF AT LEAST ONE OF EXTERNAL ELECTRONIC DEVICES IS CHANGED — 1323

DETERMINE BIS WHICH EACH OF EXTERNAL ELECTRONIC DEVICES WILL OUTPUT BASED ON RELATIVE LOCATION OF EACH OF EXTERNAL ELECTRONIC DEVICES — 1325

TRANSMIT SECOND CONTROL INFORMATION INCLUDING INDEX OF EACH OF EXTERNAL ELECTRONIC DEVICES AND INDEX OF BIS WHICH EACH OF EXTERNAL ELECTRONIC DEVICES WILL OUTPUT — 1327

END

FIG. 13

101

Front Left/
Front Right

BIS Sink 1

First communication link

Electronic device

First external electronic device
(211)

## FIG. 14

101

Front Left

First
communication link

BIS Sink 1

First external electronic device
(211)

Electronic device

Front Right

Second
communication link

BIS Sink 2

Second external electronic device
(212)

## FIG. 15

START

ESTABLISH CONNECTION WITH FIRST EXTERNAL ELECTRONIC DEVICE — 1611

PERIODIC ADVERTISING — 1613

DETERMINE BISES WHICH
FIRST EXTERNAL ELECTRONIC DEVICE WILL OUTPUT — 1615

TRANSMIT FIRST CONTROL INFORMATION INCLUDING AN INDEX
OF FIRST EXTERNAL ELECTRONIC DEVICE/BIS INDICES — 1617

ESTABLISH CONNECTION WITH SECOND EXTERNAL ELECTRONIC DEVICE — 1619

DETERMINE BIS WHICH EACH OF FIRST EXTERNAL ELECTRONIC DEVICE
AND SECOND EXTERNAL ELECTRONIC DEVICE WILL OUTPUT — 1621

TRANSMIT SECOND CONTROL INFORMATION INCLUDING
INDEX OF FIRST EXTERNAL ELECTRONIC DEVICE/BIS INDEX,
AND INDEX OF SECOND EXTERNAL ELECTRONIC DEVICE/BIS INDEX — 1623

RELEASE CONNECTION WITH SECOND EXTERNAL ELECTRONIC DEVICE — 1625

DETERMINE BISES WHICH
FIRST EXTERNAL ELECTRONIC DEVICE WILL OUTPUT — 1627

TRANSMIT THIRD CONTROL INFORMATION INCLUDING INDEX
OF FIRST EXTERNAL ELECTRONIC DEVICE/BIS INDICES — 1629

END

FIG. 16

Front Left/
Front Right

First
communication link

BIS Sink 1

BIS Source

First external electronic device
(211)

Seventh external electronic device
(311)

101

Electronic device

FIG. 17

BIS Sink 1

First external
electronic device
(211)

First communication link

BIS Sink 2

Second external
electronic device
(212)

Second communication link

101

BIS Source

Seventh external
electronic device
(311)

Electronic device

# FIG. 18

# EP 4 757 362 A1

<table>
<tr><td colspan="2">INTERNATIONAL SEARCH REPORT</td><td>International application No.<br><br>**PCT/KR2024/012507**</td></tr>
<tr><td colspan="3">**A.     CLASSIFICATION OF SUBJECT MATTER**<br><br>**H04W 4/80**(2018.01)i; **H04W 4/06**(2009.01)i; **H04W 4/02**(2009.01)i; **H04M 1/72412**(2021.01)i; **H04M 1/60**(2006.01)i; **G01S 13/02**(2006.01)i; **G01S 19/14**(2010.01)i; **G06F 3/16**(2006.01)i; **H04R 3/12**(2006.01)i<br><br>According to International Patent Classification (IPC) or to both national classification and IPC</td></tr>
</table>

**B.     FIELDS SEARCHED**

Minimum documentation searched (classification system followed by classification symbols)

H04W 4/80(2018.01); G06F 3/16(2006.01); H04R 1/10(2006.01); H04R 3/00(2006.01); H04S 1/00(2006.01); H04W 16/14(2009.01); H04W 28/26(2009.01); H04W 4/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: broadcast isochronous group, broadcast isochronous stream, control, index, audio channel

**C.     DOCUMENTS CONSIDERED TO BE RELEVANT**

| Category* | Citation of document, with indication, where appropriate, of the relevant passages | Relevant to claim No. |
|---|---|---|
| A | HUNN, Nick. Introducing Bluetooth® LE Audio. January 2022. [Retrieved on 11 November 2024]. Retrieved from <URL: https://www.bluetooth.com/wp-content/uploads/2022/01/Introducing-Bluetooth-LE-Audio-book.pdf>.<br>    See sections 4.4.3 and 4.4.9; and figure 2.3. | 1-15 |
| A | US 2022-0078623 A1 (CYPRESS SEMICONDUCTOR CORPORATION) 10 March 2022 (2022-03-10)<br>    See paragraph [0017]; claim 1; and figure 1. | 1-15 |
| A | US 2022-0197590 A1 (REALTEK SEMICONDUCTOR CORP.) 23 June 2022 (2022-06-23)<br>    See paragraphs [0103]-[0110]; claim 1; and figure 3. | 1-15 |
| A | WO 2022-155862 A1 (GUANGDONG OPPO MOBILE TELECOMMUNICATIONS CORP., LTD.) 28 July 2022 (2022-07-28)<br>    See page 10, line 13 - page 11, line 37; and claims 1-15. | 1-15 |
| A | US 2022-0078541 A1 (HUAWEI TECHNOLOGIES CO., LTD.) 10 March 2022 (2022-03-10)<br>    See paragraphs [0143]-[0219]; and claim 1. | 1-15 |

☐ Further documents are listed in the continuation of Box C.    ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **25 November 2024** | **25 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/012507**

| Patent document cited in search report | | | Publication date (day/month/year) | Patent family member(s) | | | Publication date (day/month/year) |
|---|---|---|---|---|---|---|---|
| US | 2022-0078623 | A1 | 10 March 2022 | CN | 114143792 | A | 04 March 2022 |
| US | 2022-0197590 | A1 | 23 June 2022 | CN | 114648863 | A | 21 June 2022 |
| | | | | CN | 114648864 | A | 21 June 2022 |
| | | | | CN | 114648865 | A | 21 June 2022 |
| | | | | CN | 114648866 | A | 21 June 2022 |
| | | | | CN | 116156469 | A | 23 May 2023 |
| | | | | CN | 117177221 | A | 05 December 2023 |
| | | | | US | 11709650 | B2 | 25 July 2023 |
| | | | | US | 11709651 | B2 | 25 July 2023 |
| | | | | US | 11818555 | B2 | 14 November 2023 |
| | | | | US | 12101608 | B2 | 24 September 2024 |
| | | | | US | 2022-0197589 | A1 | 23 June 2022 |
| | | | | US | 2022-0201392 | A1 | 23 June 2022 |
| | | | | US | 2022-0201393 | A1 | 23 June 2022 |
| | | | | US | 2022-0322209 | A1 | 06 October 2022 |
| | | | | US | 2023-0370772 | A1 | 16 November 2023 |
| WO | 2022-155862 | A1 | 28 July 2022 | CN | 116349258 | A | 27 June 2023 |
| US | 2022-0078541 | A1 | 10 March 2022 | CN | 112789866 | A | 11 May 2021 |
| | | | | CN | 112789866 | B | 12 July 2022 |
| | | | | CN | 115175043 | A | 11 October 2022 |
| | | | | CN | 115190389 | A | 14 October 2022 |
| | | | | EP | 3883259 | A1 | 22 September 2021 |
| | | | | US | 11778363 | B2 | 03 October 2023 |
| | | | | WO | 2020-132839 | A1 | 02 July 2020 |

Form PCT/ISA/210 (patent family annex) (July 2022)